# EUROPEAN PATENT APPLICATION

(11) **EP 2 073 100 A1**
(43) Date of publication of application: **24.06.2009**
(21) Application number: 08163349.7
(22) Date of filing: 29.08.2008
(51) Int. Cl.: G06F 3/01, A63H 13/00, A63H 30/00, A63H 3/48, G06K 9/00

(54) **Information communication and interaction device and method for the same**

(30) Priority: 29.08.2007 TW 96131981; 28.08.2008 TW 97132865; 27.05.2008 EP 08157003
(71) Applicant: Industrial Technology Research Institute, Hsinchu 31040 (TW)
(72) Inventor: Yu, Hung-Hsiu, 31040, Hsinchu (TW); Liu, Ching-Yi, 31040, Hsinchu (TW); Wu, Tung-Chuan, 31040, Hsinchu (TW); Wang, Wei-Han, 31040, Hsinchu (TW)
(74) Representative: Epping - Hermann - Fischer

(57) **Abstract**

An information communication and interaction device and a method for the same are disclosed. The device is applicable to a data processing device that can run information communication software and has first data transmission unit. The data processing device is capable of processing information communication and sharing by using the information communication software through a data transmission system. According to the method, a control unit processes information communication with the data processing device through a second data transmission unit, which is connected to the first data transmission unit, and based on coded data of the communicated information, the control unit commands a drive unit to drive a motion unit to bring about a real motion corresponding to the information. Therefore, signified conception of the information can be expressed properly by means of real interaction.

## Description

### BACKGROUND OF THE INVENTION

### 1. Field of the Invention

This invention generally relates to information communication and interaction devices and methods for the same, and more specifically, to an information communication and interaction device and a method for the same, which are applicable to a data processing device that can run the information communication software and has first data transmission unit, and are capable of expressing signified conception of information by means of real interaction.

### 2. Description of Related Art

These days, far distance information communication has deeply rooted in most people's daily lives; the far distance information communication provides advantages of convenience and instantaneousness, therefore, almost everyone uses information communication software and gets on-line everyday and contacts conveniently with other users of data transmission system.

Among present information communication software, most provide users with specific emoticons and messages as means of emotive interaction while chatting and communicating with one another, however, this means provides only a plain and dull interaction; besides, when an user is on-line and using information communication software but has to be absent from the computer for running other business, an urgent note from other user can not be acquired by the user immediately, therefore, losing the advantage of instantaneousness.

In addition, according to claims of R.O.C. Patent No. WO01585521A1, an interactive toy and computer are connected to each other, when user is playing video games via control devices, such as keyboard and mouse, the interactive toy will simultaneously bring about periodical motion reactions, however, this sort of interaction is periodical, and its motion reactions of interactions have nothing to do with subject matter of games, therefore, there is limited interactive effect.

Hence, it is a highly urgent issue in the industry for how to provide an information communication and interaction device and method for the same which are capable of effectively solving the aforementioned drawbacks of the prior arts, and further enhancing interaction and emotive expression effects as well as taking the advantage of instant communication provided by information communication software.

### SUMMARY OF THE INVENTION

In view of the disadvantages of the prior art mentioned above, it is a primary objective of the present invention to provide an information communication and interaction device and a method for the same, which are capable of expressing signified conception of information by means of real interaction, and then bringing about better effects on interaction and emotive expression.

It is another objective of the present invention to provide an information communication and interaction device and a method for the same, which provide users with an alert function to surely take the advantage of instantaneous communication of information communication software.

To achieve the aforementioned and other objectives, an information communication and interaction device is provided according to the present invention. The information communication and interaction device is applicable to a data processing device that can run information communication software; by running the information communication software, the data processing device is capable of processing information communication and sharing via a data transmission system. The information communication and interaction device comprises: a body; a second data transmission unit set on the body, for being connected to the first data transmission unit via wire or wireless means; a motion unit set on the body, for being driven to bring about a corresponding motion; a drive unit set in the body, for driving the motion unit; and a control unit set in the body and electrically connected to the second data transmission unit and the drive unit, the control unit being configured to process information communication with the data processing device, and based on coded data of the communication information, allow the drive unit to drive the motion unit to bring about a real motion corresponding to the information.

To achieve the aforementioned and other objectives, an information communication and interaction method disclosed by the present invention is executed via the aforementioned information communication and interaction device, and is applicable to the data processing device that can run the information communication software. By running the information communication software, the data processing device is capable of processing information communication and sharing via the data transmission system. The information communication and interaction method comprises: proving at least one information communication and interaction device to acquire coded data corresponding to information sent from a far end and received by the information communication software; and based on the coded data, driving the at least one information communication and interaction device to bring about a real motion corresponding to the information.

In one preferable embodiment of the information communication and interaction device of the present invention, the information communication and interaction device can include the data processing device, or can be externally connected to the data processing device. Particularly, the data processing device may have a first data transmission unit, and the information communication and interaction device may have a second data transmission unit electrically connected to the control unit, for allowing information communication to be performed via the second data transmission unit and the data processing device having the first data transmission unit. The body may have a third data transmission unit, for transmitting the received coded data to a far end server by wireless means, or for being connected to another information communication and interaction device by wire or wireless means. In one preferable embodiment, the first, second and third data transmission units can be communication interfaces that have data transmission protocol of, Bluetooth, infra-red ray, IEEE 802.11, WiMax, ZigBee, or others; or the first data transmission unit and the second data transmission unit are connectors that have IEEE 1394 or USB data transmission interfaces. The data processing device is one selected from the group consisting of computer, cell phone, personal digital assistant (PDA) and any digital device that can run the information communication software. The motion unit includes at least one selected from the group consisting of mechanism, display part, and loudspeaker; the mechanism is mechanism with a motor, and the drive unit is a motor drive unit; the display part is at least one selected from the group consisting of LED, LCD display, LED display, plasma display, and CRT display, and the drive unit is a display part drive unit; and the control unit is a control IC.

In one preferable embodiment, corresponding to the abovementioned information communication and interaction device, the real motion comprises at least one of mechanical motion, sound effect output, speech output, image output, light output and scent emitting. Particularly, the speech output may be contents of the communication information received/transmitted by a TTS (Text To Speech) sound-synthesizing information communication and interaction device, or recorded specific corresponding speech contents.

According to the foregoing preferable embodiments of the information communication and interaction device applicable to a data processing device that can run information communication software, a second embodiment of the information communication and interaction method comprises: providing at least one information communication and interaction device, and inputting specific signal coded data via an input device of the information communication and interaction device; based on the inputted coded data, driving the at least one information communication and interaction device to bring about a real motion corresponding to the information; via the information communication and interaction device, transmitting corresponding coded data to the data processing device; and having the data processing device transmit the communication information corresponding to the received coded data to a data processing device of a far end user via the information communication software.

According to the foregoing preferable embodiments of the information communication and interaction device applicable to a data processing device that can run information communication software, a third embodiment of the information communication and interaction method comprises: at the time via the information communication software of the data processing device a user is sending specific communication information to a data processing device of a far end user, transmitting corresponding coded data to the least one information communication and interaction device that has a second data transmission unit; and based on the coded data, driving the information communication and interaction device to bring about a real motion corresponding to the information.

According to the foregoing preferable embodiments of the information communication and interaction device applicable to a data processing device that can run information communication software, a fourth embodiment of the information communication and interaction method comprises: at the time via the information communication software of the data processing device a user is sending specific communication information to a data processing device of a far end user, transmitting corresponding coded data to an information communication and interaction device; based on the coded data, driving the at least one information communication and interaction device to bring about a real motion corresponding to the information; having the information communication and interaction device transmit its real interaction coded data to a far end server by means of wireless transmission; and having an information communication and interaction device of a specific far end user receive the transmitted coded data from the far end server, and based on the received coded data, driving the information communication and interaction device to bring about a real motion corresponding to the information.

According to the foregoing preferable embodiments of the information communication and interaction device applicable to a data processing device that can run information communication software, a fifth embodiment of the information communication and interaction method comprises: providing at least one information communication and interaction device and connecting it via a third data transmission unit to at least another information communication and interaction device so as to accordingly connect a plurality of information communication and interaction devices together; setting relation between ID numbers of the plurality of information communication and interaction devices and corresponding specific characters in the information communication software; via the information communication and interaction devices, acquiring coded data corresponding to information sent from a far end specific character and received by the information communication software; and based on the coded data, driving the plurality of information communication and interaction devices having the ID numbers corresponding to the specific character to bring about a real motion corresponding to the data.

According to the foregoing preferable embodiments of the information communication and interaction device applicable to a data processing device that can run information communication software, a sixth embodiment of the information communication and interaction method comprises: providing at least one information communication and interaction device and connecting it via a third data transmission unit to at least another information communication and interaction device so as to accordingly connect a plurality of information communication and interaction devices together; setting relation between ID numbers of the plurality of information communication and interaction devices and corresponding specific characters in the information communication software; via input devices of the plurality of information communication and interaction devices, inputting specific signal coded data; based on the inputted coded data, driving the plurality of information communication and interaction devices to bring about a real motion corresponding to the data; having the plurality of information communication and interaction devices transmit corresponding coded data and identity information of a specific character corresponding to the ID numbers to the data processing device; and based on the identity information of the specific character corresponding to the ID numbers, via the information communication software, having the data processing device transmit communication information corresponding to the received coded data to a data processing device of a far end specific user.

According to the foregoing preferable embodiments of the information communication and interaction device applicable to a data processing device that can run information communication software, a seventh embodiment of the information communication and interaction method comprises: setting time information by editing software provided in the data processing device; when the set time is reached, having the data processing device transmit coded information to the at least one information communication and interaction device; and having the at least one information communication and interaction device acquire the coded information, and based on the coded information, driving the information communication and interaction device to bring about a real motion corresponding to the information. In the present embodiment, the set time information is limited time information or specific data and time information; and the corresponding interaction motion setting is stopping the corresponding relation of the communication information or a specific motion corresponding to specific date and time.

According to the foregoing preferable embodiments of the information communication and interaction device applicable to a data processing device that can run information communication software, an eighth embodiment of the information communication and interaction method comprises: by editing software provided in the data processing device, setting an input device of the at least one information communication and interaction device to input specific signal coded data, and types of software being opened/closed in the data processing device and corresponding motions; providing an input device of at least one information communication and interaction device to input specific signal coded data; and based on the inputted coded data, opening/closing specific software in the data processing device. In the present embodiment, the types of software being opened/closed in the data processing device include at least one of text processing software, webpage browser software, file browser software, and information communication software; and the corresponding motions include at least one of executing software, closing software, and input strings and digits.

Compared with the prior art, the information communication and interaction device and the method for the same of the present invention have following features. The control unit carries out information communication with the data processing device, and based on code data of the communicated information, commands the drive unit to drive the motion unit to bring about a real motion corresponding to the information. By this way, signified conception of the information can be expressed through real interaction, thereby reaching the foresaid primary objective. In addition, the present invention provides real emotive expressions, and therefore, a user with a nearby data processing device can be alerted to incoming information from other users, thereby correspondingly bringing about alerting effects and reaching the foresaid another objective.

### BRIEF DESCRIPTION OF DRAWINGS

The present invention can be more fully understood by reading the following detailed description of the preferred embodiments, with reference made to the accompanying drawings, wherein:
FIG. 1 is an appearance diagram of a first embodiment of an information communication and interaction device according to the present invention;
FIGS. 2A through 2D are diagrams illustrating examples of motions according to the first embodiment of the information communication and interaction device of the present invention;
FIGS. 3A through 3H are appearance diagrams of a second embodiment of the information communication and interaction device according to the present invention;
FIG. 4 is a diagram of illustrating examples of motions according to the second embodiment of the information communication and interaction device of the present invention;
FIG. 5 is a diagram of applying either the first or the second embodiment of the information communication and interaction device of the present invention together with webcam to a liquid crystal display (LCD);
FIG. 6 is a diagram of displaying time on the display part in a daily waiting state according to either the first or the second embodiment of the information communication and interaction device of the present invention;
FIG. 7 is a diagram of integrating either the first or the second embodiment of the information communication and interaction device of the present invention with editing software;
FIGS. 8A through 8C are diagrams of a third embodiment of the information communication and interaction device according to the present invention;
FIG. 9 is a codes conversion table of the third embodiment of the information communication and interaction device of the present invention;
FIG. 10 is an appearance diagram of a fourth embodiment of the information communication and interaction device according to the present invention;
FIGS. 11A through 11D are diagrams of illustrating examples of motions according to the fourth embodiment of the information communication and interaction device of the present invention;
FIGS. 12A through 12D are appearance diagrams of a fifth embodiment of the information communication and interaction device according to the present invention;
FIGS. 13A and 13B are diagrams of either the fourth or the fifth embodiment of the present invention, which illustrate states of emitting and displaying specific scent based on specific symbol or message;
FIG. 14 is a diagram of applying either the fourth or the fifth embodiment of the information communication and interaction device of the present invention together with webcam to a liquid crystal display (LCD);
FIG. 15 is a diagram of displaying time on the display part in a daily waiting state of either the fourth or the fifth embodiment of the information communication and interaction device of the present invention;
FIG. 16 is a diagram of integrating either the fourth or the fifth embodiment of the information communication and interaction device of the present invention with editing software;
FIG. 17A is a diagram of a first embodiment of an information communication and interaction method of the present invention;
FIG. 17B is a flow chart of the first embodiment of the information communication and interaction method of the present invention;
FIG. 18A is a diagram of a second embodiment of the information communication and interaction method of the present invention;
FIG. 18B is a flow chart of the second embodiment of the information communication and interaction method of the present invention;
FIG. 19A is a diagram of a third embodiment of the information communication and interaction method of the present invention;
FIG. 19B is a flow chart of the third embodiment of the information communication and interaction method of the present invention;
FIG. 20A is a diagram of a fourth embodiment of the information communication and interaction method of the present invention;
FIG. 20B is a flow chart of the fourth embodiment of the information communication and interaction method of the present invention;
FIG. 21 is an appearance diagram of a sixth embodiment of the information communication and interaction device of the present invention;
FIG. 22A is an appearance diagram of a seventh embodiment of the information communication and interaction device of the present invention;
FIG. 22B is a diagram of the seventh embodiment of the information communication and interaction device of the present invention together with webcam to an information communication and interaction device body;
FIG. 22C is a diagram of the seventh embodiment of the information communication and interaction device of the present invention applicable to a handwriting input display;
FIG. 23A is a diagram of a fifth embodiment of the information communication and interaction method of the present invention;
FIG. 23B is a flow chart of the fifth embodiment of the information communication and interaction method of the present invention;
FIG. 23C is a flow chart of a sixth embodiment of the information communication and interaction method of the present invention;
FIG. 24A is a diagram of a seventh embodiment of the information communication and interaction method of the present invention; and
FIG. 24B is a flow chart of the seventh embodiment of the information communication and interaction method of the present invention.

### DETAILED DESCRIPTION OF PREFERRED EMBODIMENTS

The following illustrative embodiments are provided to illustrate the disclosure of the present invention, these and other advantages and effects can be apparently understood by those in the art after reading the disclosure of this specification. The present invention can also be performed or applied by other different embodiments. The details of the specification may be on the basis of different points and applications, and numerous modifications and variations can be devised without departing from the spirit of the present invention.

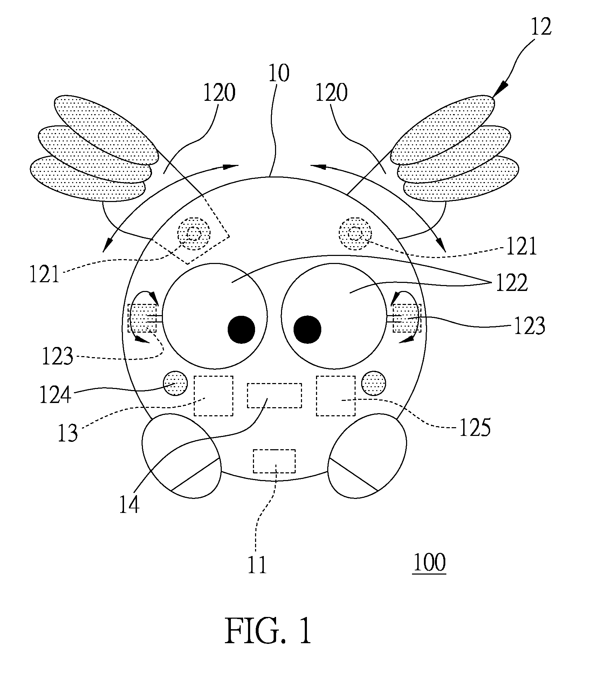

Please refer to FIG. 1, which is an appearance diagram of one first embodiment of the information communication and interaction device of the present invention; in the present embodiment, the information communication and interaction device is applicable to data processing device (not shown in FIG. 1) that can run the information communication software and has a first data transmission unit. The data processing device can use the information communication software to process information communication and sharing via a data transmission system. The information communication software can be either Microsoft Network (MSN) provide by Microsoft company, or Yahoo Messenger provided by Yahoo company, or Skype provided by Skype company, QQ communication software, or ICQ communication software. The data processing device can be computer, cellphone, personal digital assistant (PDA), any digital device that can run the information communication software, or others.

As shown in FIG. 1, the information communication and interaction device 100 comprises a body 10, a second data transmission unit 11, a motion unit 12, a drive unit 13, and a control unit 14; each of the foresaid claimed elements of the information communication and interaction device 100 is given a detailed description below:

The body 10: in the present embodiment, the body 10 is in a ball shape, which has two supporting legs that provide the body 10 with stable stand on object of desk; from the appearance, the ball shape part of the body is torso of the information communication and interaction device of the present invention, and the two supporting legs are extension legs of the torso of the information communication and interaction device of the present invention.

The second data transmission unit 11, which is set on the body 10, is for being connected to the first data transmission unit via wire or wireless means. In the present invention, the first data transmission unit of the data processing device and the second data transmission unit 11 are connectors with USB data transmission interface, but not limited to as stated herein. In a case of wireless connection, the first data transmission unit and the second data transmission unit 11 can be interfaces with data transmission protocol of Bluetooth, infra-red ray, IEEE 802.11, WiMax, ZigBee, or others. In a case of wire connection, the first data transmission unit and the second data transmission unit 11 can be connectors with IEEE 1394 data transmission interfaces.

According to the stated aforesaid, since the first data transmission unit and the second data transmission unit 11 of the present embodiment are connectors with USB data transmission interface, the information communication and interaction device 100 obtains its required power from the data processing device via direct connection between the first data transmission unit and the second data transmission unit 11, namely, the USB data transmission interface transmits power provide by a power supply module of the data processing device to the information communication and interaction device 100; naturally, the information communication and interaction device 100 of the present invention can also have a power unit installed inside the body 10 to provide the required power for the information communication and interaction device 100, wherein the power unit can be one selected from the group consisting of battery, solar energy, and power supply cord.

The motion unit 12, which is set on the body 10, is for bringing about a real motion after the motion unit 12 is driven. In the present embodiment, the motion unit 12 comprises three parts: a mechanism, at least one display part 124, and at least one loudspeaker 125; wherein, the mechanism comprises at least one wing mechanism, e.g. a wing mechanism 120 with a motor 121, and at least one eye mechanism, e.g. an eye mechanism 122 with a motor 123, the display part 124 is a LED, and the loudspeaker 125 is a speaker.

The drive unit 13, which is set inside the body 10, is for driving the motion unit 12; in the present embodiment, the drive unit 13 comprises: motor drive unit that is electrically connected to motors 122 and 123 of the mechanism, LED drive unit that is electrically connected to the display part 124, and speaker drive unit that is electrically connected to the loudspeaker 125.

The control unit 14, which is set inside the body 10, is electrically connected to the second data transmission unit 11 and the drive unit 13, and is for acquiring coded data corresponding to the information received by the information communication software or sending coded data corresponding to the input information received from input device of the information communication and interaction device 100 via the second data transmission unit 11, and then based on the acquired or sent coded data, commanding the drive unit 13 to drive the motion unit 12 to bring about real motion corresponding to the information; in the present embodiment, the control unit 14 is one control IC. The real motion comprises at least one of mechanical motion, sound effect output, speech output, image output, light output and scent emitting.

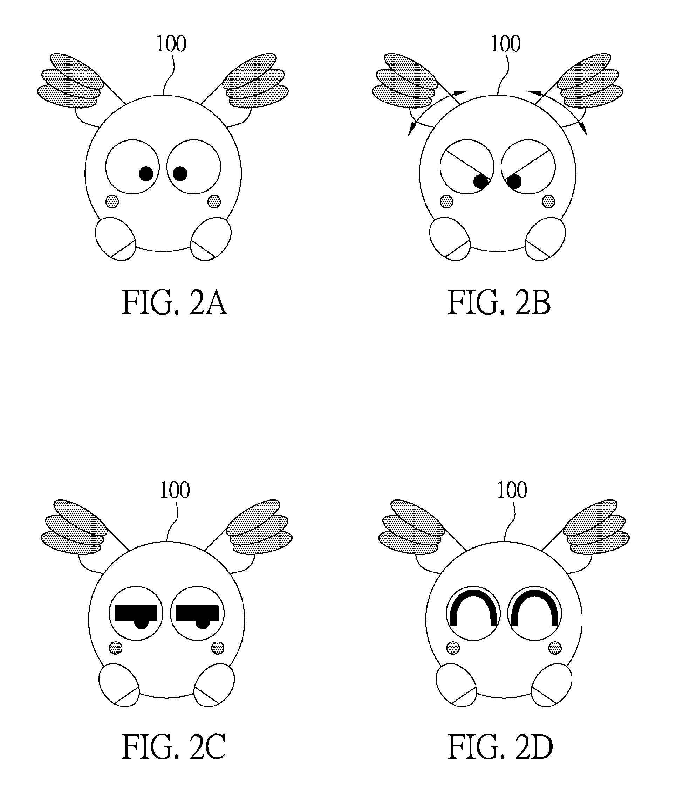

To give a clear view of motion pattern of the information communication and interaction device 100 of the present invention, please refer to FIG. 2A as well as FIG. 2B; FIG. 2A is a diagram of preset state of the information communication and interaction device 100 of the present invention; when a user receives an information as shown is FIG. 2B via the information communication software of the data processing device, the control unit 14 processes information communication with the data processing device via the second data transmission unit 11 that is connected to the first data transmission unit, and then based on the coded data of the communication information, the control unit 14 commands the drive unit 13 to drive the motor 121 to have the wing mechanism 120 swing, and to drive the motor 123 to have the eye mechanism 122 adjust to a state as shown in FIG. 2B; meanwhile, the drive unit 13 is commanded to drive the display part 124, namely, LED to emit light or flash, as well as to drive the loudspeaker 125 to give off preset voice or sound; therefore, as stated aforesaid, signified conception of the communication information can be expressed properly by means of real interaction. Particularly, the communication information can be at least one of text information, digit information, picture information, symbol information, image information and sound information. In addition, FIGS. 2C and 2D give further examples of motions of the present embodiment of the information communication and interaction device 100 of the present invention.

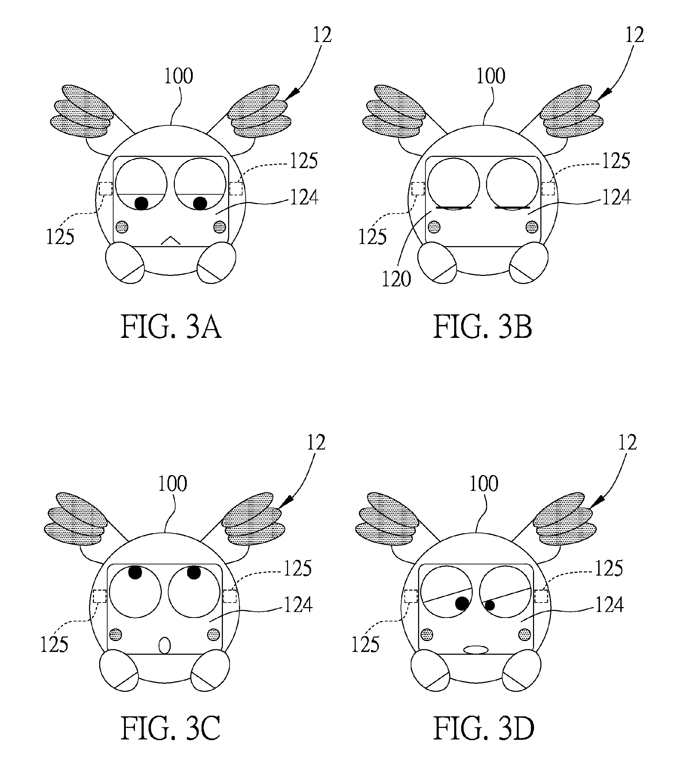

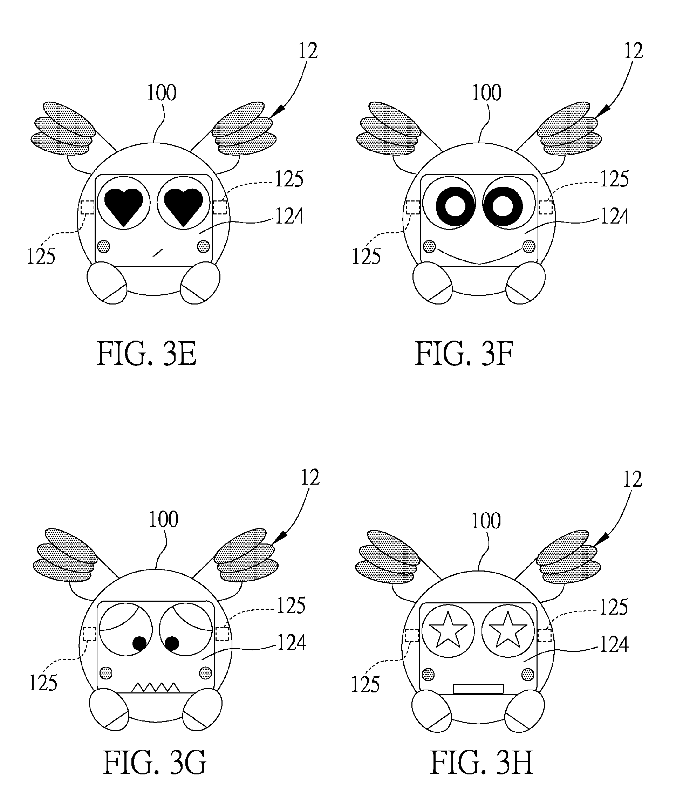

Please further refer to FIGS. 3A through 3H, which are appearance diagrams of one second embodiment of the information communication and interaction device 100 of the present invention; as shown in the FIGS, the motion unit 12 of the second embodiment comprise, same as in the first embodiment, mechanism, display part 124, and loudspeaker 125 three parts, the major features of the second embodiment different from the first embodiment are: the display part 124 of the second embodiment is LCD display that replaces the LED and the eye mechanism of the first embodiment, and the LCD display provides a means of displaying information in more varieties, corresponding, the drive unit 13 for driving the LCD display is one display drive unit, wherein, the display part 124 is not limited to LCD display, the display part 124 can also be one of the group of LED display, plasma display, CRT display, and others.

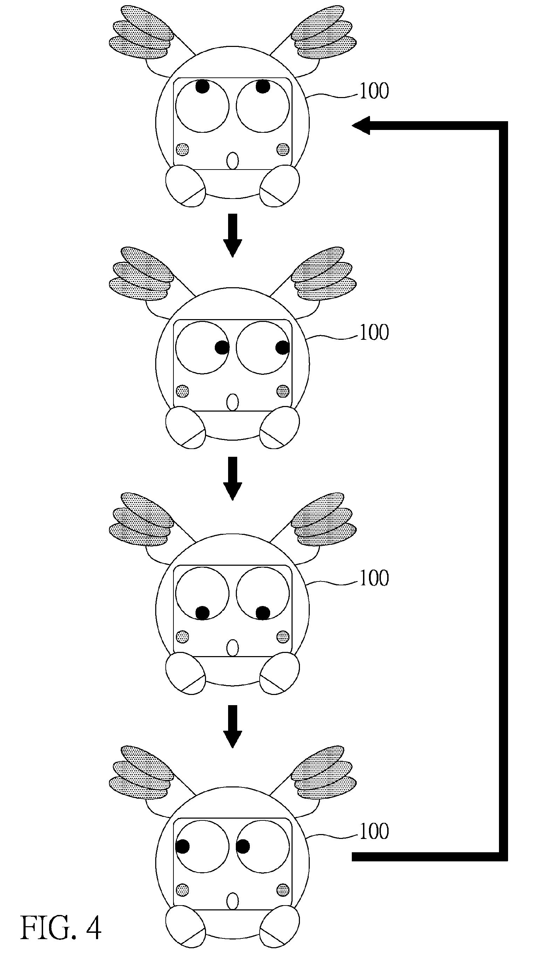

Naturally, of user receives dynamic information via the information communication software of the data processing device, the information communication and interaction device 100 of the present invention is also capable of dynamically bringing about real motion, as shown in FIG. 4.

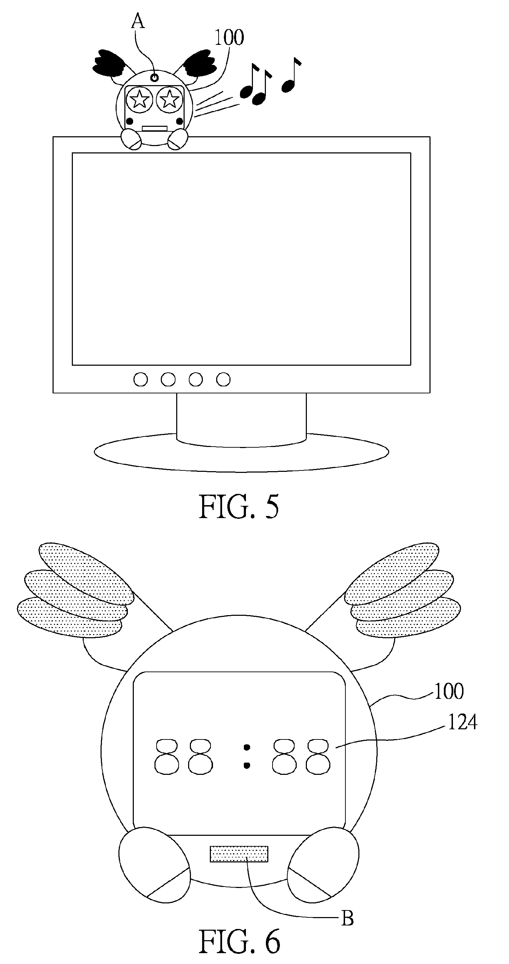

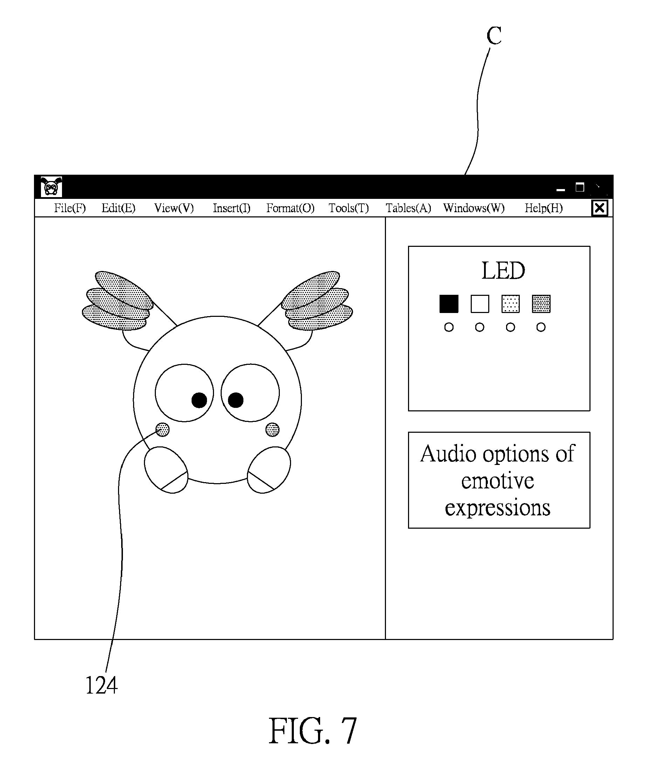

In addition, as shown in FIG. 5, the information communication and interaction device 100 of the present invention can be used together with webcam, camera lens of the webcam is indicated by letter A in FIG. 5. As shown in FIG. 6, time is displayed on the display part 124 in a daily waiting state (a control key for adjusting the displayed time is indicated by letter B in FIG. 6). As shown in FIG. 7, the information communication and interaction device 100 of the present invention may be provided with editing software C. A user can adjust related settings of the information communication and interaction device 100 of the present invention, e.g. colors of the display part 124 or sound effect brought by emotive expresses or setting of interactive motion , on the data processing device via the editing software C.

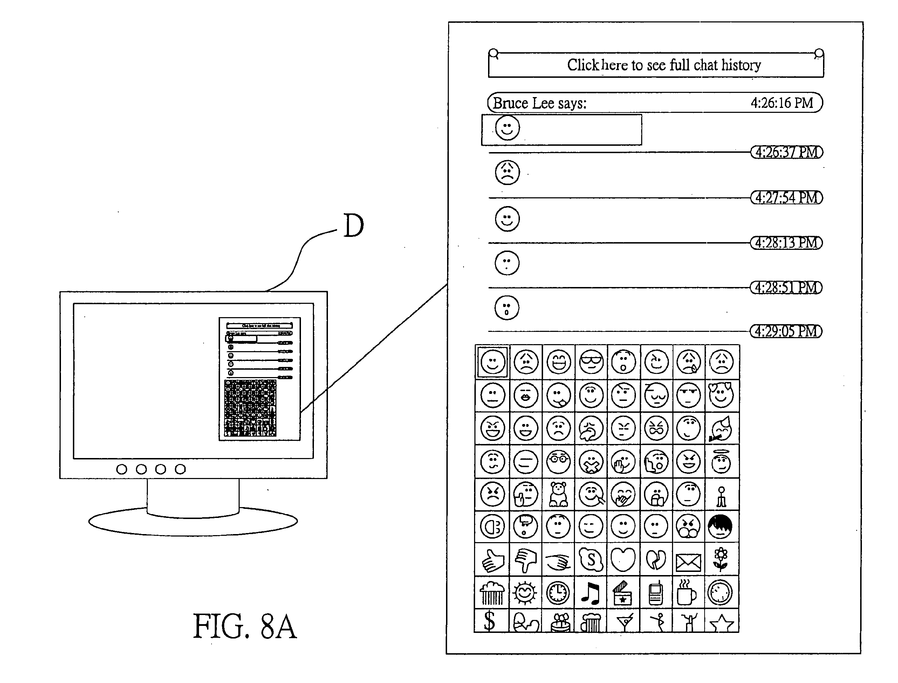

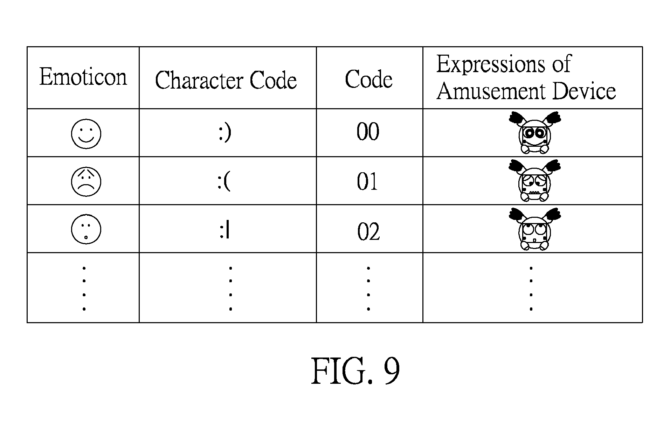

Please further refer to FIGS. 8A through 8C and 9, which are diagrams of one third embodiment of the present invention, wherein, the information communication software is one instant communication software, the data processing devices are computer D and computer E, and the data transmission system is one network system; in the present embodiment, each of the computer D and the computer E which can run the instant communication software, the computer D is the one that sends out emoticon, and the computer E is the one that receives the emoticon and brings about real motion corresponding to the emoticon.

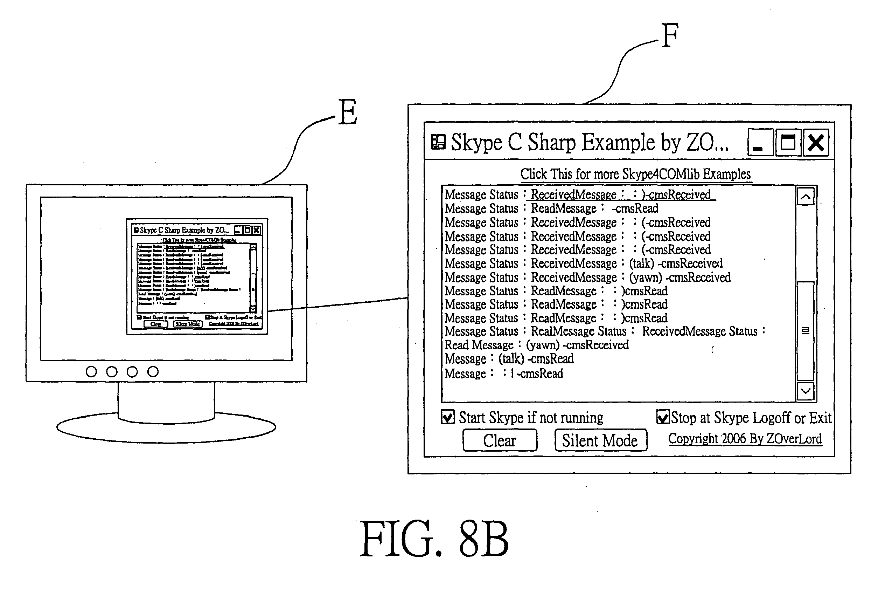

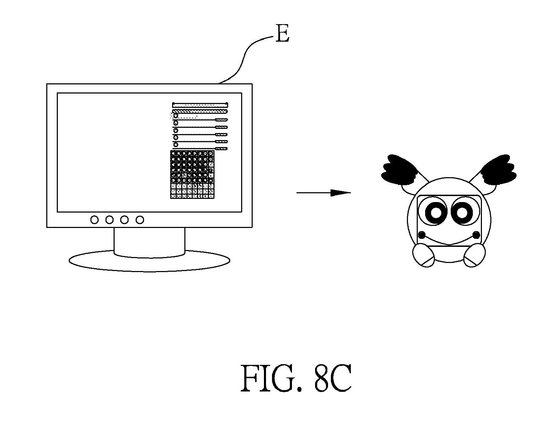

First, as shown in FIG. 8A, user of the computer A sends an emoticon " ", the icon surrounded by a black frame in the instant communication software as illustrated in the FIG. , to another computer user, namely user of the computer E, via the instant communication software; next, as shown in FIG. 8B, after the computer E receives the emoticon sent from the computer D, software F intercepts the emoticon received by the instant communication software and interprets it into a specific character code, for example, the character code in the present embodiment is ":)"; next, as shown in FIG. 8C, based on table shown in FIG. 9, software F of the computer E converts the interpreted code ":)"into a specific code applicable to the information communication and interaction device 100 of the present invention, for instance, according to the table, the specific code corresponding to character code ":)"is "00"; consequently after the information communication and interaction device 100 of the present invention acquires the specific code "00"from the computer E, the control unit processes determination step and commands the display part, e.g. LCD display as in the second embodiment, to display expression corresponding to the specific code.

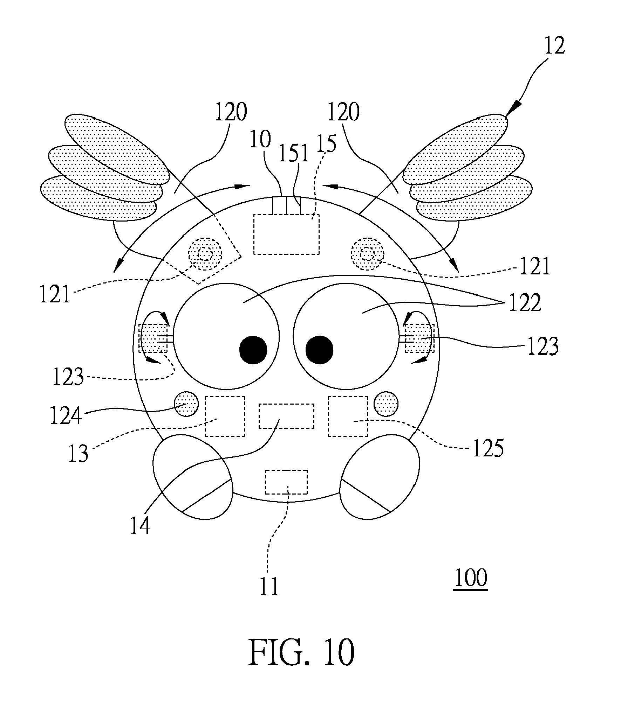

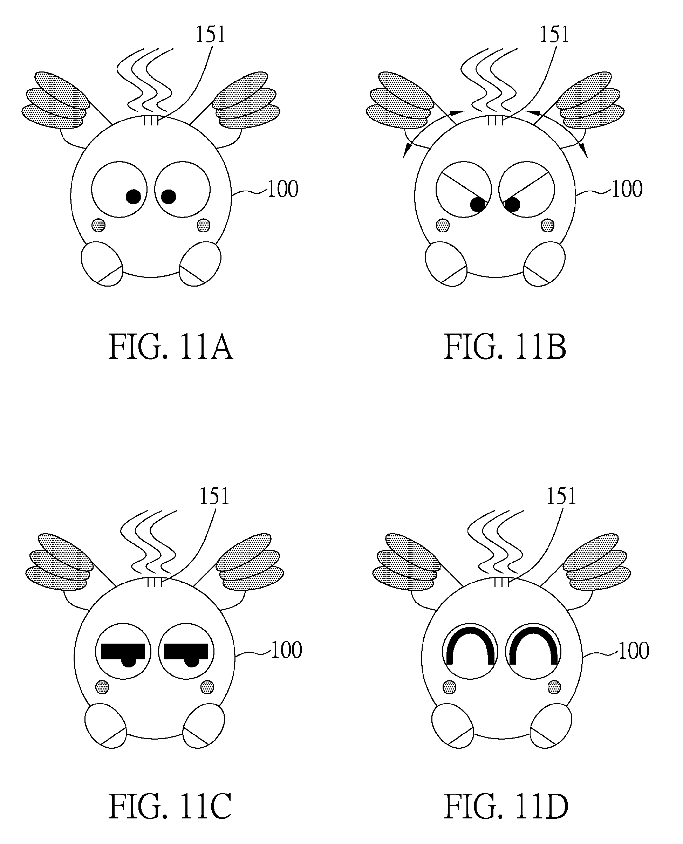

Please refer to FIG. 10, which is an appearance diagram of one fourth embodiment of the information communication and interaction device 100 according to the present invention; as shown in FIG. 10, the fourth embodiment, same as the first embodiment, comprises elements including a body 10, a second data transmission unit 11, a motion unit 12, a drive unit 13, a control unit 14, a display part 124, and a loudspeaker 125; the main features of the fourth embodiment different from the first embodiment are: the fourth embodiment further comprises a scent emitting unit 15 and a scent emitting pore 151 that emits scent from the scent emitting unit 15; based on the received specific emoticon and message, the scent emitting unit 15 correspondingly emits specific scent to provide user with scented interaction amusement; as shown in FIGS. 11A through 11D, the control unit 14 processes information communication with the data processing device via the second data transmission unit 11 that is connected to the first data transmission unit, wherein, in addition to foresaid command that drives the mechanism to bring about corresponding motion, the coded data of the communication data also includes command that drives the scent emitting unit 15 to emit specific scent via the scent emitting pore 151; therefore, at the time the control unit 11, based on the coded data, commands the drive unit 13 to drive the motor 121 to have the mechanism swing, it also correspondingly determines and selects different specific scent.

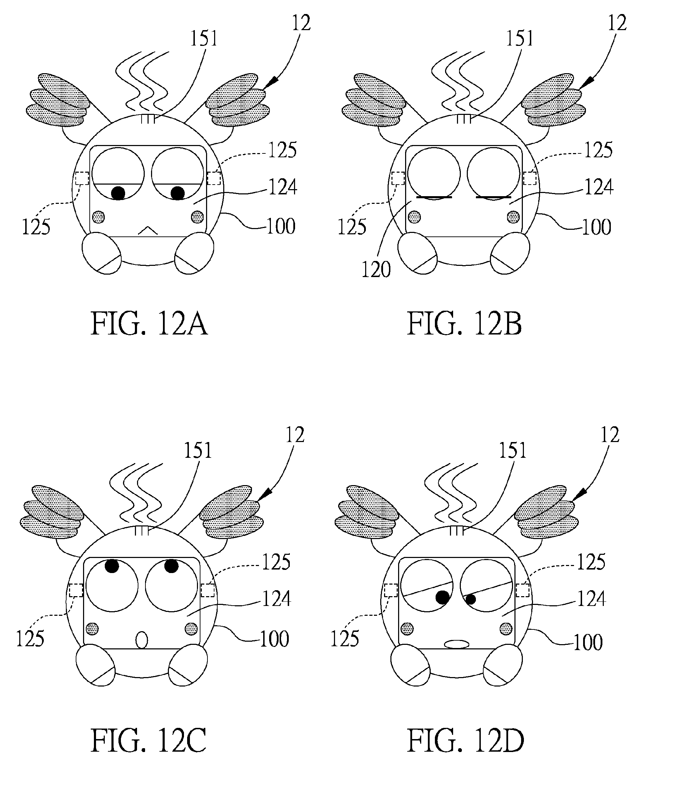

Please further refer to FIGS. 12A through 12D, which are appearance diagrams of one fifth embodiment of the information communication and interaction device 100 of the present invention; as shown in the FIGS., the display part 124 of the fifth embodiment is LCD display that replaces the eye mechanism and LED of the fourth embodiment, along with the scent emitting unit 15, the LCD display provides more varieties for displaying information.

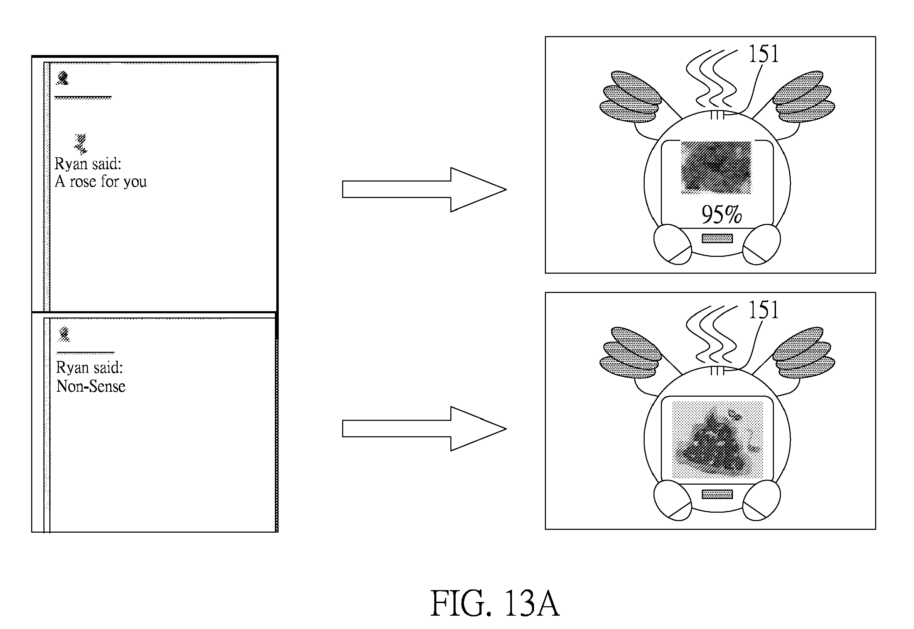

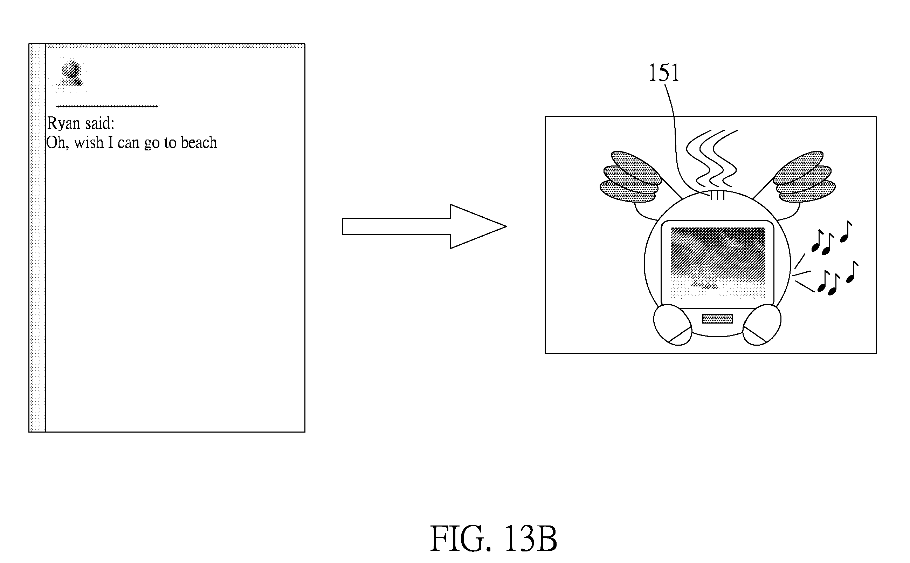

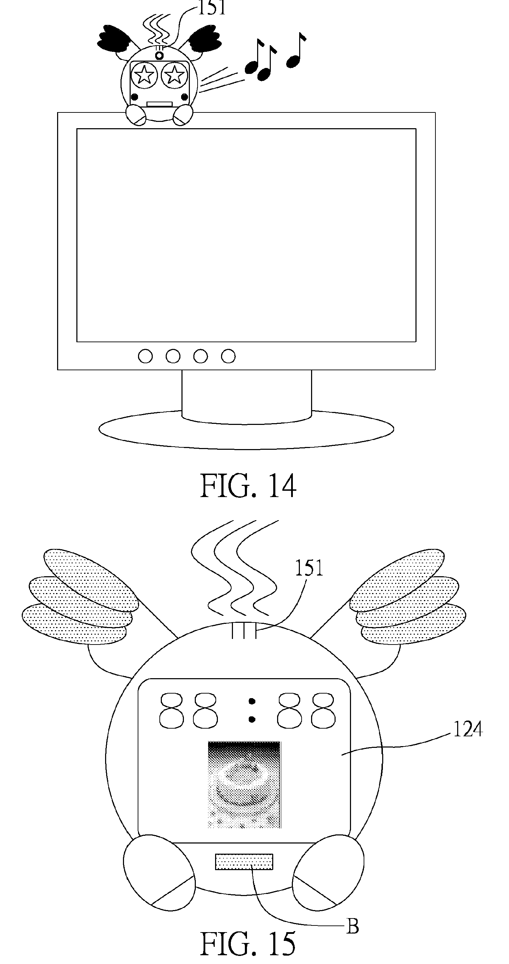

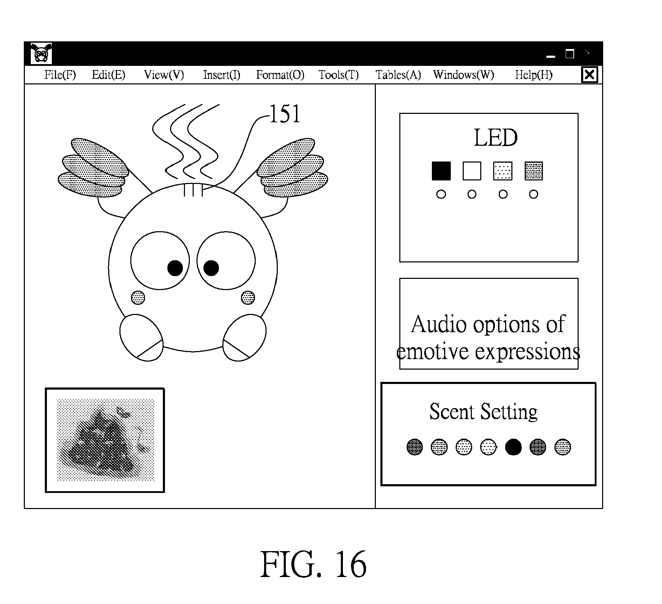

In addition, as shown in FIGS. 13A and 13B, based on specific emotion or message, the foregoing information communication and interaction device 100 of the present invention in both the fourth embodiment and the fifth embodiment are capable of, in addition to emitting specific scent, displaying motion pictures of the scent and sound effect of specified percentage, for instance, a message of a wish of seeing beach is sent as shown in FIG. 13B, and then a motion picture of ocean is displayed, a scent of ocean is emitted, and sound effect of wave is played; besides, as shown in FIG. 14, the information communication and interaction device of the present invention can be used together with one webcam, camera lens is indicated as letter A in the FIG., and one specific scent is emitted in cope with scene caught by the camera; in addition, as shown in FIG. 15, the information communication and interaction device of the present invention displays time in a daily waiting state, letter B in FIG. 15 indicates one control key that is for adjusting to display time, for instance, a birthday date is preset, and then at the preset date, a corresponding preset scent is emitted, a motion picture of birthday cake is displayed, and a birthday song is played; one more additional feature, as shown in FIG. 16, the information communication and interaction device 100 of the present invention may be provided with editing software C. A user is allowed to, via the editing software C, adjust related settings of the information communication and interaction device 100 of the present invention, e.g. color of the display part 124, sound effect or setting of interactive motion and scent of various expressions, and others on the data processing device.

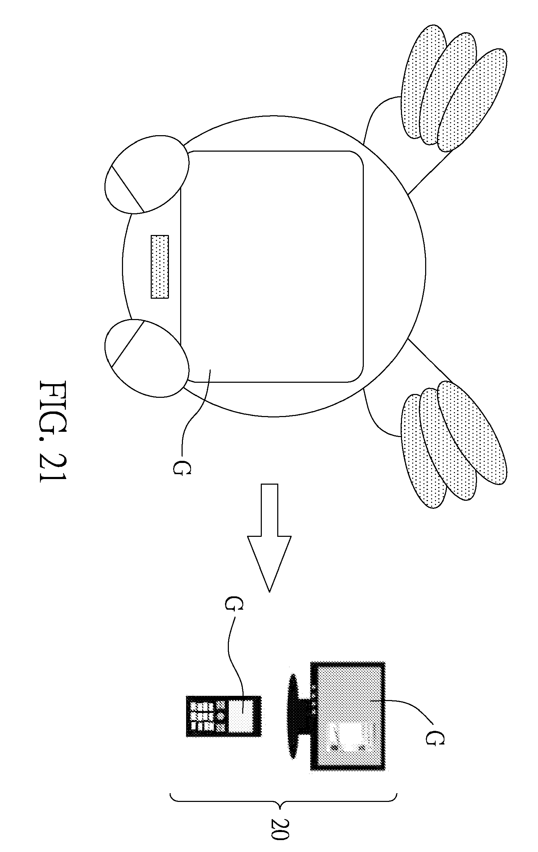

FIG. 21 is an appearance diagram of a sixth embodiment of the information communication and interaction device of the present invention. A shown in FIG. 21, the sixth embodiment differs from the above embodiments in that, the information communication and interaction 100 includes a data processing device 20 therein. That is, the information communication and interaction 100 is the data processing device 20 (a display part G of the information communication and interaction 100 is integrated with the data processing device 20), such that communication can be performed directly via the information communication and interaction 100 and a data processing device 20 of a far end user.

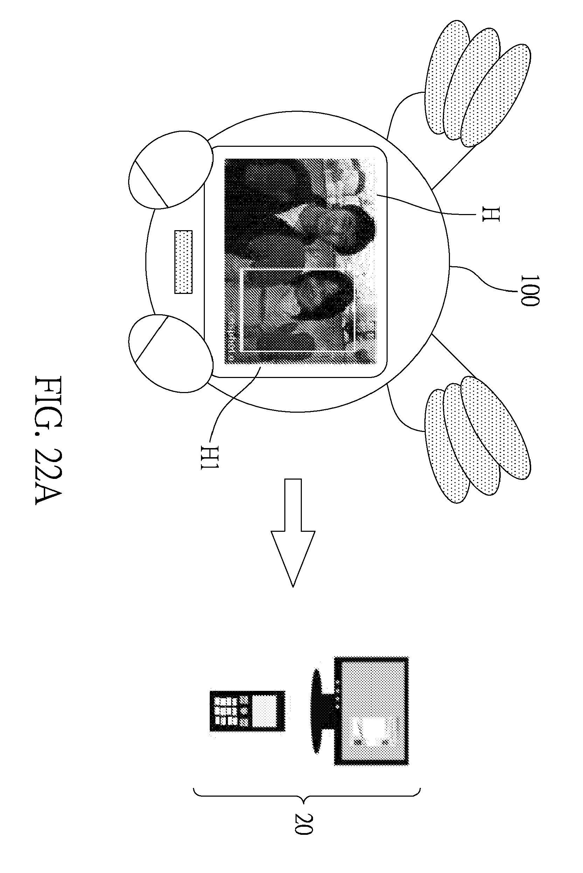

FIGS. 22A through 22C are appearance diagrams of a seventh embodiment of the information communication and interaction device of the present invention. As shown in FIGS. 22A through 22C, the seventh embodiment differs from the sixth embodiment in that, the information communication and interaction 100 is externally connected to the data processing device 20, or the information communication and interaction 100 is the data processing device 20 to communicate with a data processing device 20 of a far end user.

As shown in FIG. 22A, the information communication and interaction 100 can be a touch control liquid crystal display H, wherein based on data input or made (e.g. drawn) by a user to the touch control liquid crystal display H, the control unit of the information communication and interaction 100 identifies the data type and generates corresponding signal coded data. Particularly, the touch control liquid crystal display H may be defined with a touch block H1 (such as, in local region of a particular scene, a picture or a specific character in the displayed image). And, corresponding relation between the touch block H1 and specific character identity data to be transmitted is set in editing software. For example, by touching the set touch block H1 in the touch control liquid crystal display H of the information communication and interaction 100, communication can be performed by connecting the information communication software of the data processing device 20 to the set specific characters, or communication can be performed by the information communication software and the set specific characters (the information communication and interaction 100 is a data processing device). On the other hand, after touching the set touch block H1, the data processing device 20 may transmit coded data of the communication information via the first data transmission unit to the second data transmission unit of the information communication and interaction 100, so as to allow the information communication and interaction 100 to bring about a real motion corresponding to the information based on the coded data.

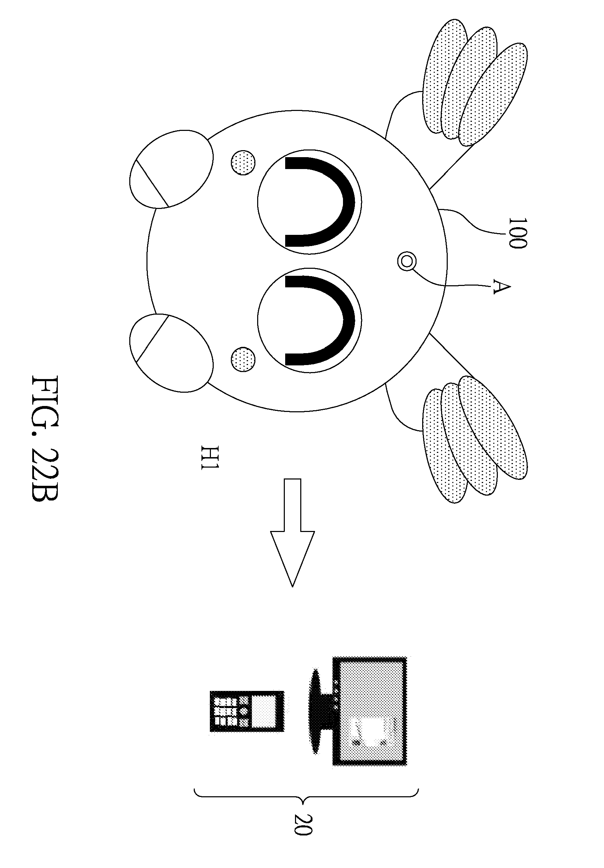

As shown in FIG. 22B, the information communication and interaction 100 has a camera A. Particularly, the camera is a webcam. By the webcam capturing facial expression data of a user (i.e. any change of the facial expressions) in real time, and transmitting the facial expression data to the information communication and interaction 100 in real time, the control unit 14 of the information communication and interaction 100 may identify the type of facial expression data and generate corresponding specific signal coded data, so as to allow the drive unit 13 of the information communication and interaction 100 to bring about a real motion corresponding to the communication information based on the received coded data, and allow the second data transmission unit 11 connected to the first data transmission unit to transmit the coded data to the data processing device 20. The data processing device transmits the communication information corresponding to the received coded data to a data processing device of a far end user via the information communication software, or the information communication and interaction 100 is a data processing device and directly transmits the communication information corresponding to the received coded data to a data processing device of a far end user via the information communication software.

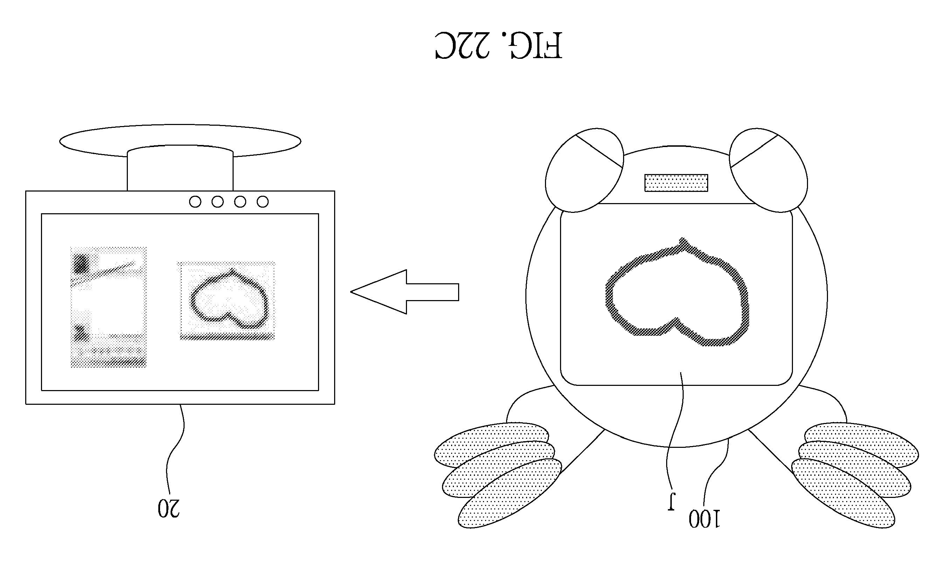

As shown in FIG. 22C, the information communication and interaction 100 can be a handwriting input display J. By a user inputting or making (e.g. drawing) data to the handwriting input display J, the control unit 14 of the information communication and interaction 100 may identify the type of the data and generate corresponding specific signal coded data, so as to allow the drive unit 13 of the information communication and interaction 100 to bring about a real motion corresponding to the communication information based on the received coded data, and allow the second data transmission unit 11 connected to the first data transmission unit to transmit the coded data to the data processing device 20. The data processing device transmits the communication information corresponding to the received coded data to a data processing device of a far end user via the information communication software, or the information communication and interaction 100 is a data processing device and directly transmits the communication information corresponding to the received coded data to a data processing device of a far end user via the information communication software. As shown in FIG. 22C, when the user hand-draws a heart-shaped picture to the information communication and interaction 100, the heart-shaped picture would be correspondingly displayed on a data processing device of a far end user.

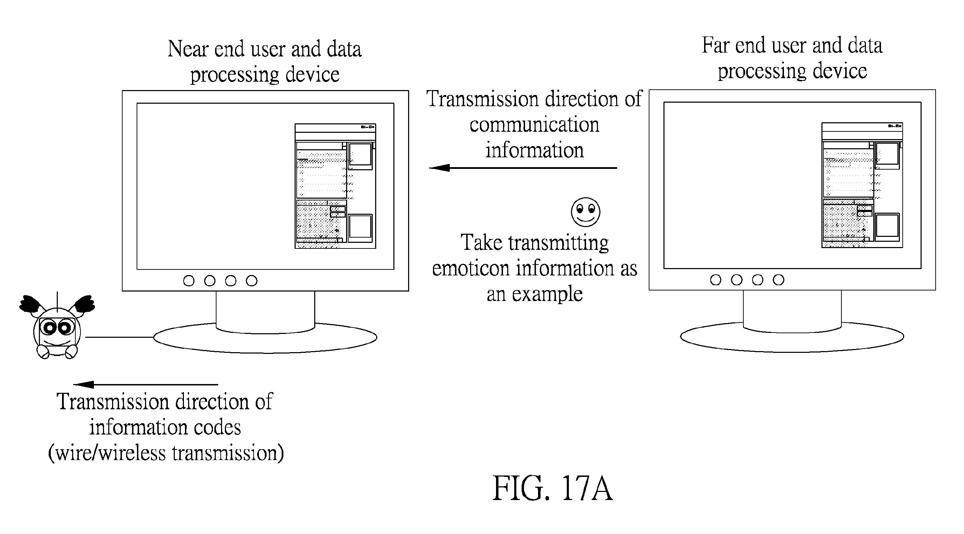

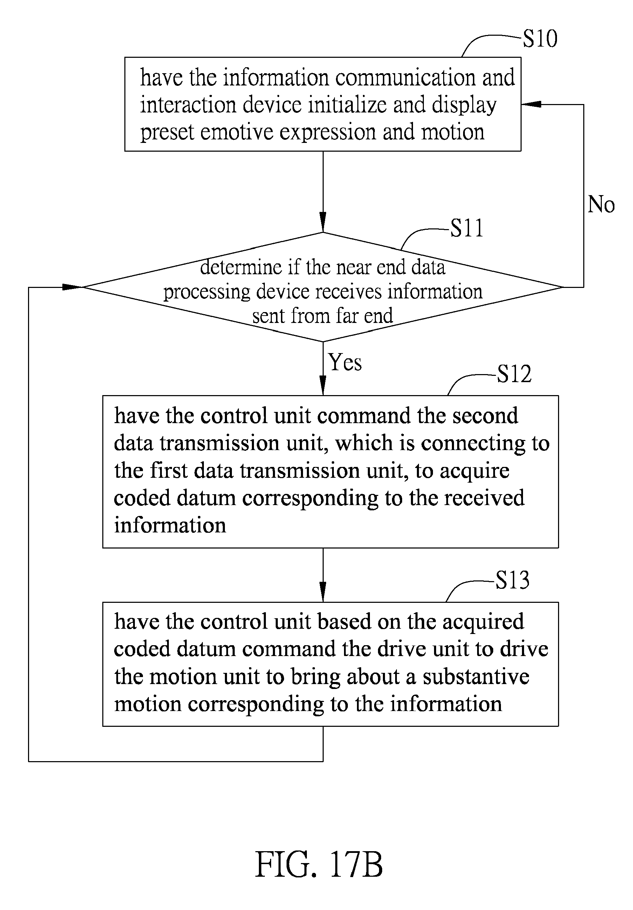

Please refer to FIGS. 17A and 17B, which are diagram and flowchart of one first embodiment of the information communication and interaction method of the present invention; the information communication and interaction method is executed through the foregoing claimed information communication and interaction device, and is applicable to both near end data processing device and far end data processing device, each of which can run the information communication software and has first data transmission unit, the near end data processing device receives communication information, e.g. emoticon information, from far end data processing device by using the information communication software via data transmission system; as shown in FIG. 17B, the information communication and interaction method of the present embodiment first executes step S10.

In step S10, have the information communication and interaction device initialize and display preset emotive expression and motion; proceed to step S11.

In step S11, determine if the information communication software of the near end data processing device receives information sent from far end; if yes, proceed to step S12; otherwise, proceed back to step S10.

In step S12, have the control unit 14 command the second data transmission unit 11, which is connected to the first data transmission unit, to acquire coded data corresponding to the received information; proceed to step S13.

In step S13, have the control unit 14, based on the acquired coded data, command the drive unit 13 to drive the motion unit 12 to bring about a real motion corresponding to the information; and then proceed back to step S11.

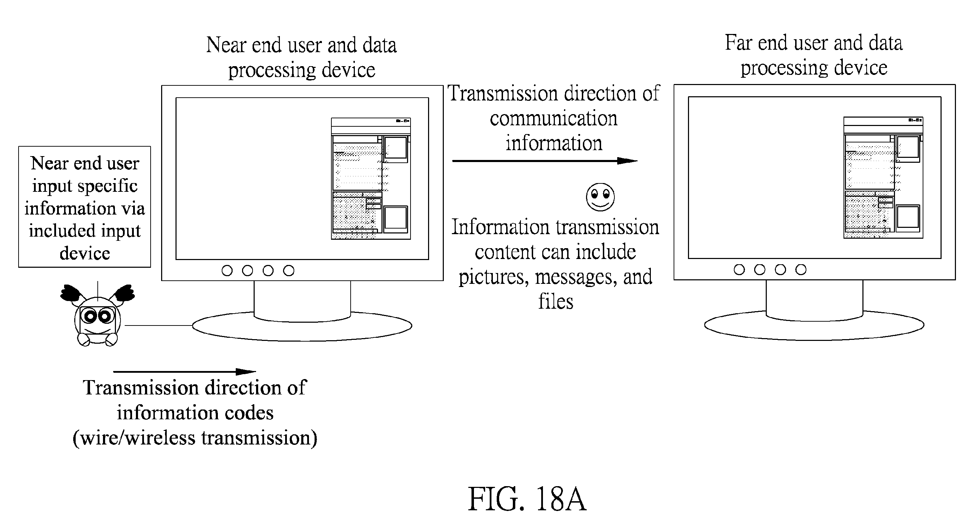

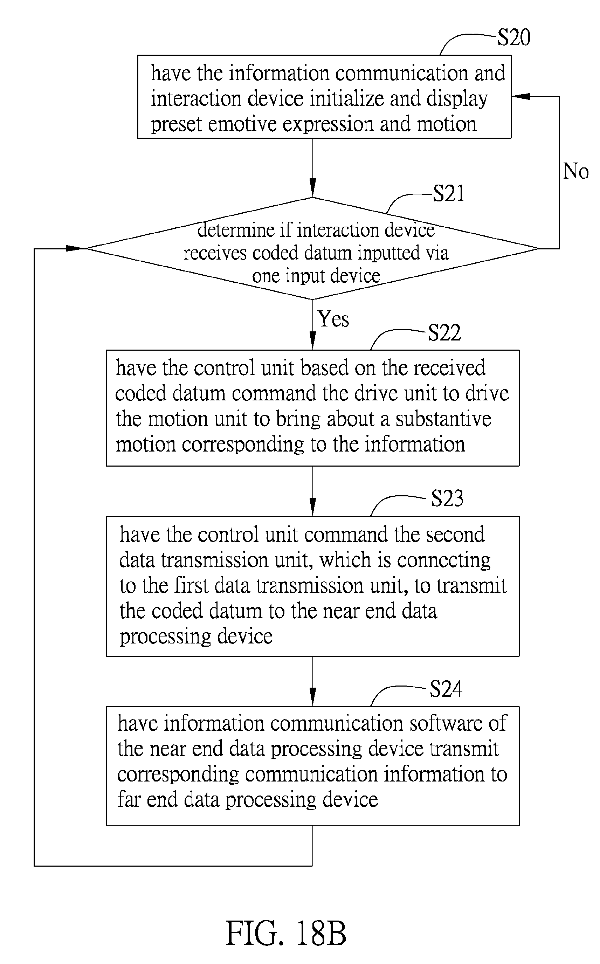

Please further refer to FIGS. 18A and 18B, which are diagram and flowchart of one second embodiment of the information communication and interaction method of the present invention; the near end data processing device can input specific information to the information communication and interaction device via input device, and then have the specific information transmit to the far end data processing device via data transmission system, transmitted content of the information can be pictures, messages, or files; as shown in FIG. 18B, the information communication and interaction method of the present embodiment first executes step S20.

In step S20, have the information communication and interaction device initialize and display preset emotive expression and motion; proceed to step S21.

In step S21, determine if interaction device receives coded data inputted via the input device; if yes, proceed to step S22; otherwise, proceed back to step S20.

In step S22, have the control unit 14, based on the received coded data, command the drive unit 13 to drive the motion unit 12 to bring about a real motion corresponding to the information; proceed to step S23.

In step S23, have the control unit 14 command the second data transmission unit 11, which is connected to the first data transmission unit, to transmit the coded data to the near end data processing device; proceed to step S24.

In step S24, have the information communication software of near end the data processing device transmit corresponding communication information to far end data processing device; and then proceed back to step S21.

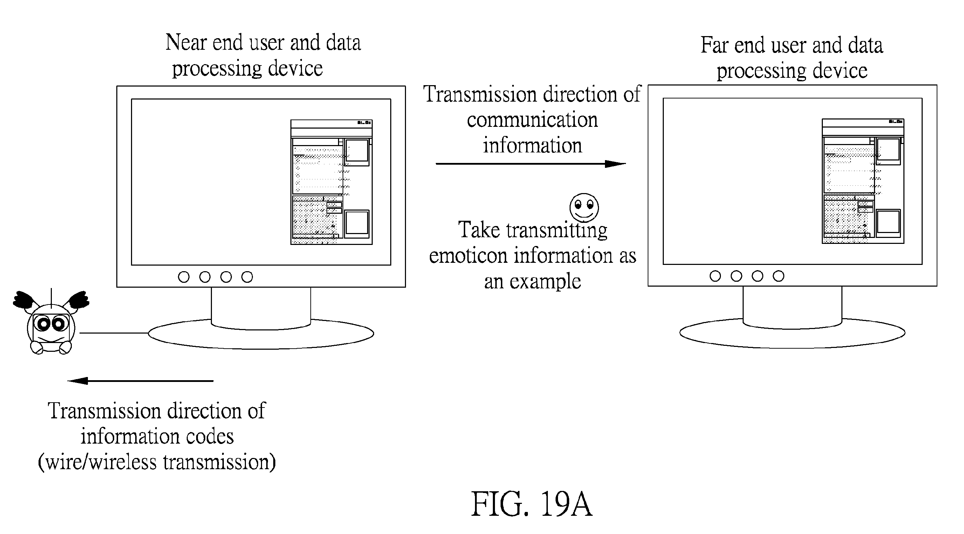

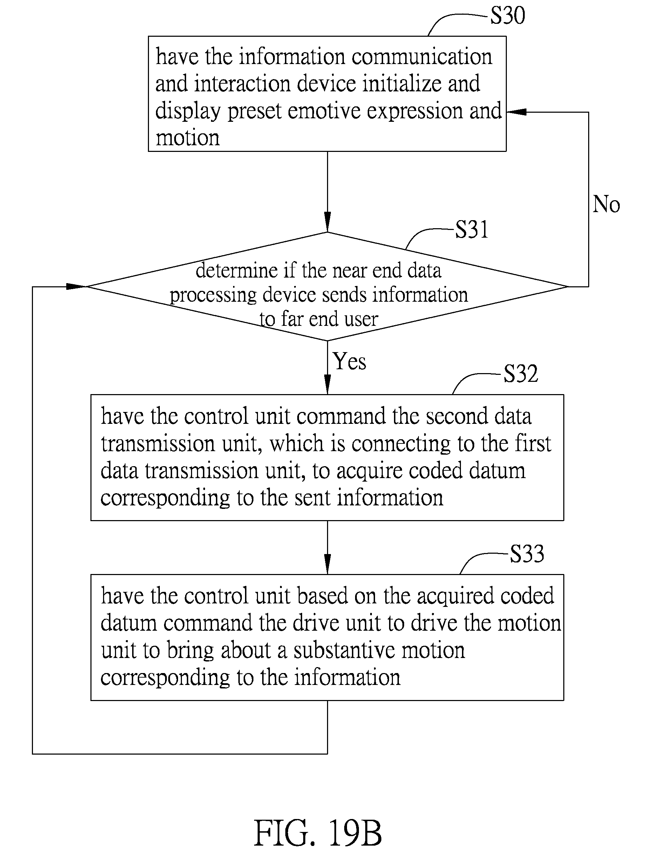

Please refer to FIGS. 19A and 19B, which are diagram and flowchart of one third embodiment of the information communication and interaction method of the present invention; the near end data processing device can transmit communication information, e.g. emoticon information, to far end data processing device by using the information communication software via data transmission system; as shown in FIG. 19B, the information communication and interaction method of the present embodiment first executes step S30.

In step S30, have the information communication and interaction device initialize and display preset emotive expression and motion; proceed to step S31.

In step S31, determine if the information communication software of the near end data processing device sends communication information to far end user; if yes, proceed to step S32; otherwise, proceed back to step S30.

In step S32, have the control unit 14 command the second data transmission unit 11, which is connected to the first data transmission unit, to acquire coded data corresponding to the sent information; proceed to step S33.

In step S33, have the control unit 14, based on the acquired coded data, command the drive unit 13 to drive the motion unit 12 to bring about a real motion corresponding to the information; proceed back to step S31.

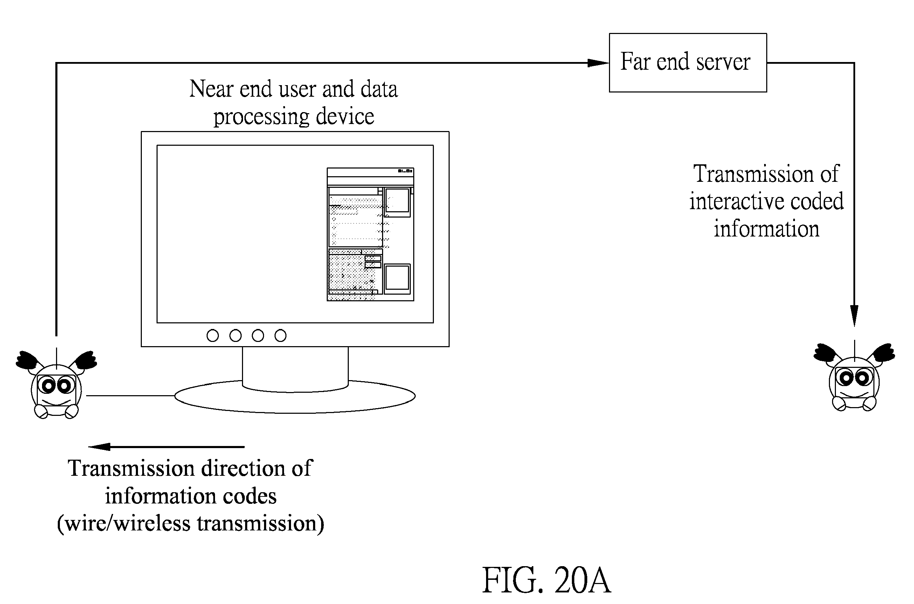

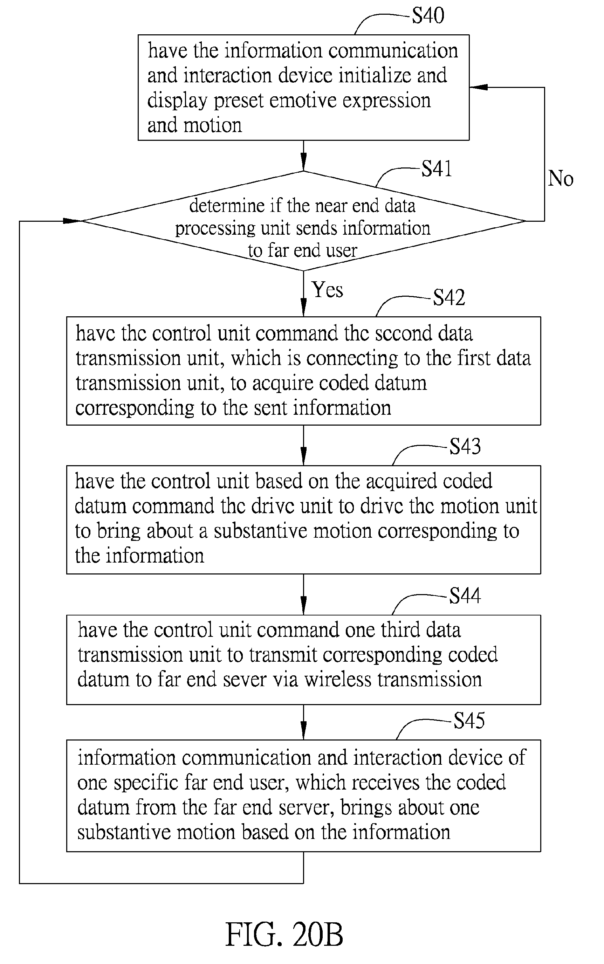

Please refer to FIGS. 20A and 20B, which are diagram and flowchart of one fourth embodiment of the information communication and interaction method of the present invention; the near end data processing device can transmit communication information to one far end server 16 by using the information communication software via data transmission system, and then the far end information communication and interaction device receives the communication information transmitted by the far end server; as shown in FIG. 20B, the information communication and interaction method of the present embodiment first executes step S40.

In step S40, have the information communication and interaction device initialize and display preset emotive expression and motion; proceed to step S41.

In step S41, determine if near end data processing unit sends communication information to far end user; if yes, proceed to step S42; otherwise, proceed back to step S40.

In step S42, have the control unit 14 command the second data transmission unit 11, which is connected to the first data transmission unit, to acquire coded data corresponding to the sent communication information; proceed to step S43.

In step S43, have the control unit 14, based on the acquired coded data, command the drive unit 13 to drive the motion unit 12 to bring about a real motion corresponding to the information; proceed to step S44.

In step S44, have the control unit 14 command one third data transmission unit (not shown in the FIGS.) to transmit corresponding coded data to the far end sever 16 via wireless transmission; proceed to step S45.

In step S45, the information communication and interaction device of one specific far end user, which receives the coded data from the far end server, brings about one real motion based on the transmitted coded data; proceed back to step S41.

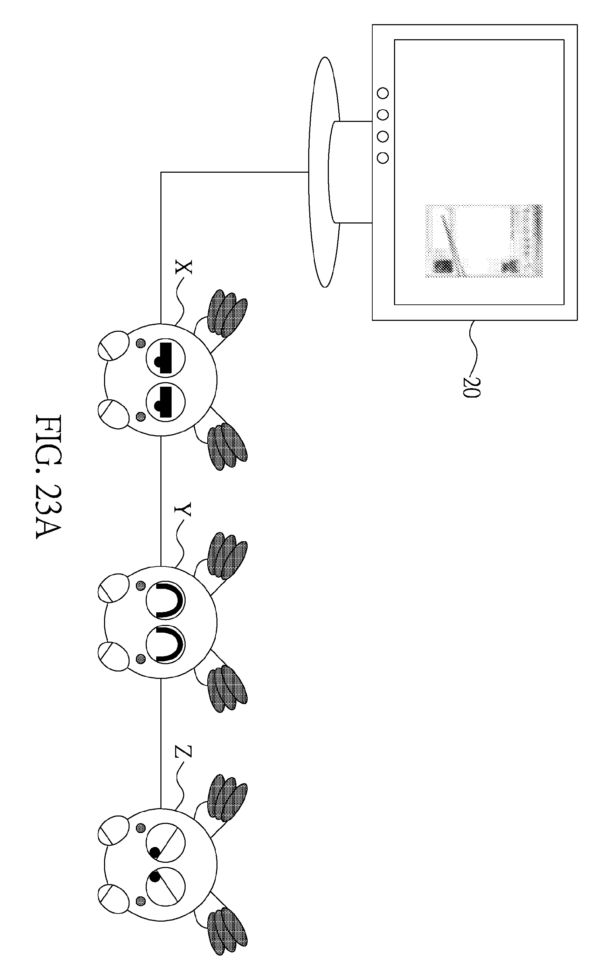

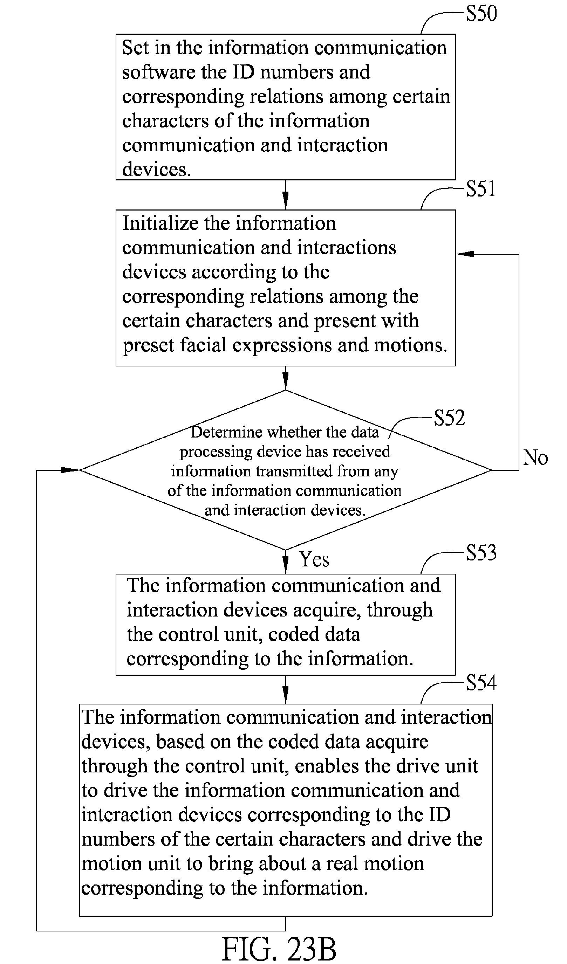

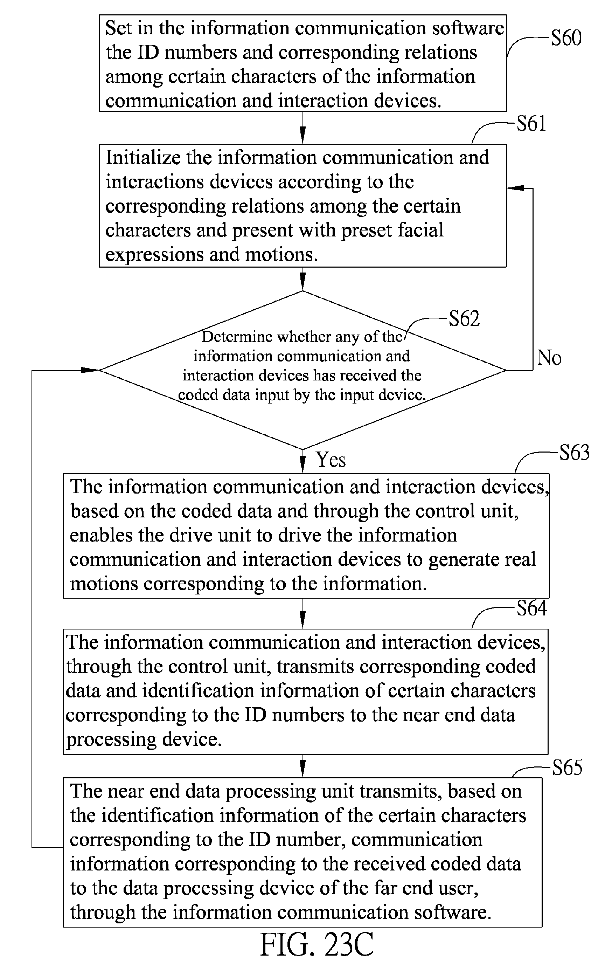

Please refer to FIGS. 23A to 23C, which are schematic diagram and flow chart of a fifth embodiment of the information communication method of the present invention. As shown in FIG. 23A, the fifth embodiment, different from the above-mentioned embodiments, discloses that the information processing device 20 is serially connected a plurality of information communication and interaction devices 100X, Y, Z (three information communication and interaction devices are illustrated in the firth embodiment, while the actual number of the information communication and interaction devices is not limited to three). The information communication and interaction devices X, Y, Z can transmit communication information to one another, and each of the information communication and interaction devices X, Y, Z can be set to be a certain character in a multi-communication mode, and can be set to have various expression ways of real motions according to the certain character's temperament and interest. In practice, the information processing device 20 can manage the information communication and interaction device X, Y, Z in a centralized manner, or output management modes into the information communication and interaction device X, Y, Z individually. For example, the information processing device 20 can be connected to the information communication and interaction devices X, Y, Z, respectively. In practice, the information communication and interaction devices are connected to the first data transmission unit of the information processing device 20. Then, the information communication and interaction device is connected through the third data transmission unit to a next information communication and interaction device, and connected to the information communication and interaction devices X, Y, Z in this way. As shown in FIG. 23B, according to the connection way of FIG. 23 the information communication and interaction method first executes step S50.

In step S50, set in the information communication software the ID numbers and corresponding relations among certain characters of the information communication and interaction devices X, Y, Z. Proceed to step S51.

In step S51, initialize the information communication and interactions devices X, Y, Z according to the corresponding relations among the certain characters and present with preset facial expressions and motions. Proceed to step S52.

In step S52, determine whether the information processing device 20 has received information transmitted from any of the information communication and interaction devices X, Y, Z. If YES, proceed to step S53. If NO, repeat step S52.

Is step S53, the information communication and interaction devices X, Y, Z, based on the coded data acquire through the control unit 14, enables the drive unit 13 to drive the information communication and interaction devices X, Y, Z corresponding to the ID numbers of the certain characters. Return to step S52.

As shown in FIG. 23C, which is a flow chart of a sixth embodiment of the information communication and interaction method of the present invention according to the connection way of FIG. 23A, the near end data processing device can use an input device to input certain information into the information communication software, and transmit communication messages through the information transmission system to the far end data processing device. Different from the second embodiment, the sixth embodiment uses the single information processing device 20 to connect the information communication and interaction devices X, Y, Z. As shown in the drawings, the information communication and interaction method can also execute step S60 first.

In step S60, set in the information communication software the ID numbers and corresponding relations among certain characters of the information communication and interaction devices X, Y, Z. Proceed to step S61.

In step S61, initialize the information communication and interactions devices X, Y, Z according to the corresponding relations among the certain characters and present with preset facial expressions and motions. Proceed to step S62.

In step S62, determine whether any of the information communication and interaction devices X, Y, Z has received the coded data input by the input device. If YES, proceed to step S63. If NO, repeat step S62.

Is step S63, the information communication and interaction devices X, Y, Z, based on the coded data thought the control unit 14, enables the drive unit 11 to drive the information communication and interaction devices X, Y, Z to generate motions corresponding to the information. Proceed to step S64.

In step S64, the information communication and interaction devices X, Y, Z, through the control unit 14, transmits corresponding coded data and identification information of certain characters corresponding to the ID numbers to the near end data processing device 20 via the second data transmission unit 11 connected to the first data transmission unit. Proceed to step S65.

In step S65, the information processing unit 20 transmits, based on the identification information of the certain characters corresponding to the ID number, communication information corresponding to the received coded data to the information processing device (not shown) of the far end user, through the information communication software. Return to step S62.

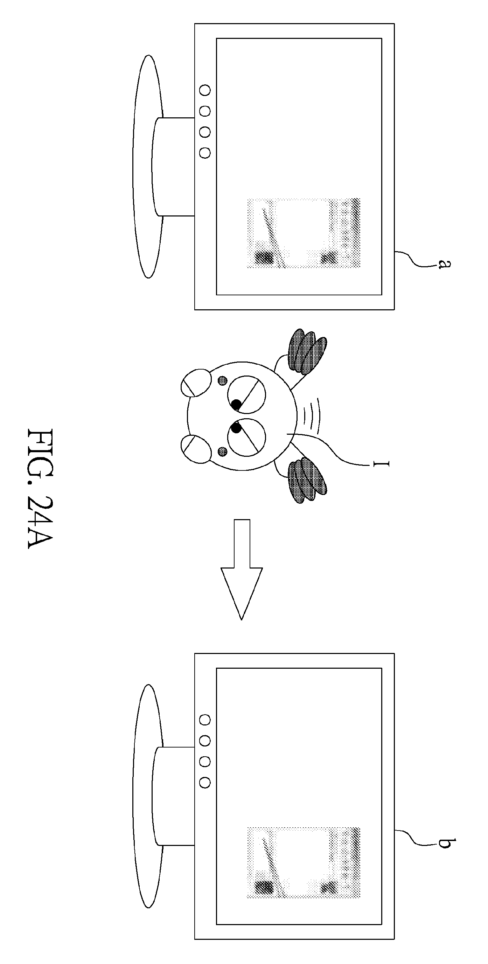

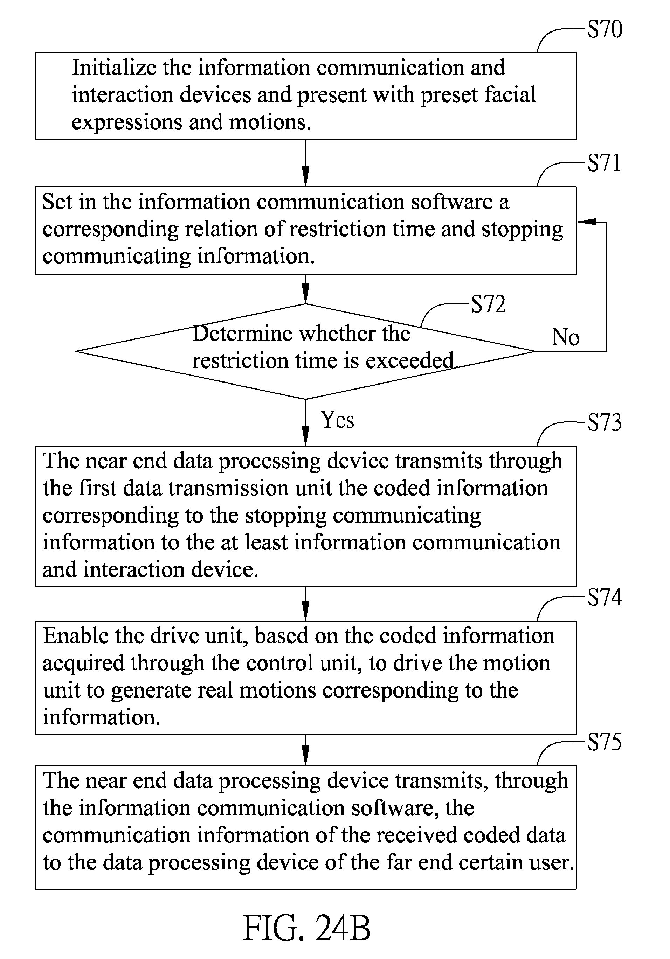

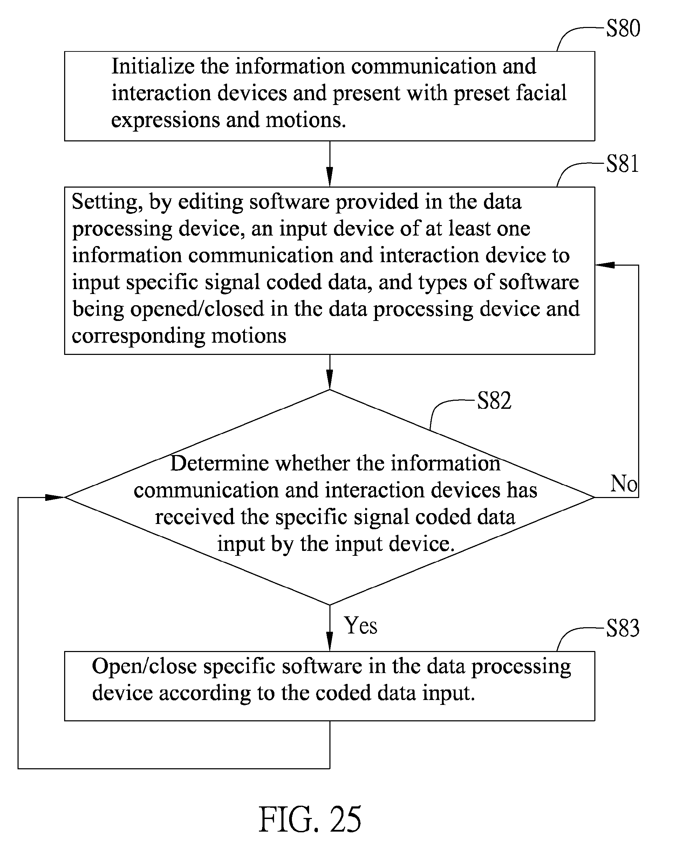

Please refer to FIGS. 24A to 24B, which are a schematic diagram and a flow chart of a seventh embodiment of the information communication and interaction method of the present invention. As shown in FIG. 24A, the seventh embodiment, different from the sixth embodiment, adds a remind restriction setting function to information communication and interaction devices a, b. As shown in FIG. 24B, the information communication and interaction method executes step S70 first.

In step S70, initialize the information communication and interaction devices a, b and present with preset facial expressions and motions. Proceed to step S71.

In step S71, set in the information communication software a corresponding relation of restriction time and stopping communicating information. Proceed to step S72.

IN step S72, determined whether the restriction time is exceeded. If YES, proceed to step S73. If NO, repeat step S72.

In step S73, the information processing device a transmits through the first data transmission unit the coded information corresponding to the stopping communicating information to the at least information communication and interaction device 100. Proceed to step S74.

In step S74, enable the drive unit 13, based on the coded information acquired through the control unit 14, to drive the motion unit 12 to generate real motions corresponding to the information. Proceed to step S75.

In step S75, the information processing device transmits, through the information communication software, the communication information of the received coded data to the information processing device b of the far end certain user, to inform the information processing device b that the time spent by far end user in communication exceeds the restriction time. In practice, the user who indulges in using the on-line chat function is reminded of the restriction time, and will be forced to stop communicating any longer.

It should be noted that the detailed application methods of each step of the claimed information communication and interaction method of the present invention are same as those of foregoing claimed information communication and interaction device, and there is no need of repetitive descriptions herein.

In view of the above, the information communication and interaction device and method for the same of the present invention mainly have the control unit process information communication with data processing device via the second data transmission unit that is connected to the first data transmission unit, and based on the coded data of the communication information, the control unit commands the drive unit to drive the motion unit to bring about real motion corresponding to the information; therefore, signified conception of the information can be expressed properly by means of real interaction, thereby bringing about better effects on interaction and emotive expression; in addition, since the information communication and interaction device and method for the same of the present invention provide real expression, user with nearby data processing device can be alerted to incoming information from other users, thereby correspondingly bringing about alerting effects and taking advantage of instant communication provided by information communication software.

The foregoing descriptions of the detailed embodiments are only illustrated to disclose the features and functions of the present invention and not restrictive of the scope of the present invention. It should be understood to those in the art that all modifications and variations according to the spirit and principle in the disclosure of the present invention should fall within the scope of the appended claims.

## Claims

1. An information communication and interaction device, which is applicable to data processing device capable of running information communication software, wherein the data processing device is capable of processing information communication and sharing by using the information communication software via a data transmission system; the information communication and interaction device comprising:
a body;
a motion unit mounted on the body, for being driven to bring about a corresponding motion;
a drive unit mounted in the body, for driving the motion unit; and
a control unit mounted in the body and electrically connected to the drive unit, the control unit being configured to process information communication with the data processing device, and based on coded data of information for the information communication, allow the drive unit to drive the motion unit to bring about a real motion corresponding to the information.

2. The information communication and interaction device of claim 1, wherein the data processing device is included in the information communication and interaction device.

3. The information communication and interaction device of claim 1, wherein the data processing device comprises a first data transmission unit, and the information communication and interaction device comprises a second data transmission unit electrically connected to the control unit, for allowing the information communication to be performed via the second data transmission unit and the first data transmission unit of the data processing device.

4. The information communication and interaction device of claim 3, wherein data transmission between the first and second data transmission units is bi-directional.

5. The information communication and interaction device of claim 1, wherein the information is at least one of text information, digit information, picture information, symbol information, image information and sound information.

6. The information communication and interaction device of claim 1, wherein the real motion is at least one of mechanical motion, sound effect output, speech output, image output, light output, and scent emitting.

7. The information communication and interaction device of claim 6, wherein the speech output includes contents of communication information received/transmitted by a TTS (Text To Speech) sound-synthesizing information communication and interaction device, or recorded specific corresponding speech contents.

8. The information communication and interaction device of claim 1, wherein the body includes an input device for inputting signal coded data to drive the interaction device to bring about a corresponding real motion, wherein the input device is at least one of electronic switch, touch control device, keying device, sound input device, camera, and sensor.

9. The information communication and interaction device of claim 8, wherein the sound input device is a microphone for retrieving sound data of a user, so as to allow the control unit of the information communication and interaction device to identify contents and a type of the sound data and generate corresponding specific signal coded data.

10. The information communication and interaction device of claim 8, wherein the camera is a webcam for capturing facial expression data of a user, so as to allow the control unit of the information communication and interaction device to identify a type of the facial expression data and generate corresponding specific signal coded data.

11. The information communication and interaction device of claim 8, wherein the touch control device is a touch control liquid crystal display, for allowing a user to input or make data to the touch control liquid crystal display, so as to allow the control unit of the information communication and interaction device to identify a type of the data and generate corresponding specific signal coded data.

12. The information communication and interaction device of claim 8, wherein the sensor is a scent sensor for retrieving scent data, so as to allow the control unit of the information communication and interaction device to identify a type of the scent data and generate corresponding specific signal coded data.

13. The information communication and interaction device of claim 1, wherein the body includes a third data transmission unit, for performing wireless transmission of received coded data to a far end server, or for having wire or wireless connection to another information communication and interaction device.

14. The information communication and interaction device of claim 3 or 13, wherein the first, second and third data transmission units are communication interfaces with data transmission protocol of at least one of Bluetooth, infra-red ray, IEEE 802.11, WiMax, and Zigbee.

15. The information communication and interaction device of claim 3 or 13, wherein the first, second and third data transmission units are connectors with at least one of IEEE 1394 and USB data transmission interface.

16. The information communication and interaction device of claim 3 or 13, wherein connection between the first data transmission unit and the second data transmission unit or the third data transmission unit allows power to be acquired from the data processing device for the information communication and interaction device.

17. The information communication and interaction device of claim 1, wherein the data processing device is one of computer, cell phone, personal digital assistant (PDA), and a digital device capable of running the information communication software.

18. The information communication and interaction device of claim 1, wherein the motion unit comprises at least one of mechanism, display part, and loudspeaker.

19. The information communication and interaction device of claim 18, wherein the mechanism is a mechanism capable of being driven by external force.

20. The information communication and interaction device of claim 19, wherein the drive unit is a drive unit having external force.

21. The information communication and interaction device of claim 18, wherein the display part is at least one of LED, LCD display, LED display, plasma display, and CRT display.

22. The information communication and interaction device of claim 18, wherein the display part and the loudspeaker are driven by the drive unit to emit light or flash.

23. The information communication and interaction device of claim 18, wherein the loudspeaker is a speaker.

24. The information communication and interaction device of claim 1, wherein the control unit is a control IC.

25. The information communication and interaction device of claim 1, further comprising a power unit mounted in the body, for providing power, wherein the power unit is at least one of battery, solar energy, and power supply cord.

26. The information communication and interaction device of claim 1, further comprising a scent emitting unit installed in the body, for correspondingly emitting a specific scent based on received coded data.

27. The information communication and interaction device of claim 1, further comprising editing software provided in the data processing device, for a user to adjust associated settings for the information communication and interaction device via the editing software, wherein the associated settings include at least one of color setting for a display part, sound effect setting for change of facial expressions, speech setting, interaction motion setting, scent setting, identify setting for corresponding specific characters, time setting, and opening/closing software type setting.

28. An information communication and interaction method, applying the information communication and interaction device of claim 1, the information communication and interaction method comprising:
providing at least one interaction device to acquire coded data corresponding to information transmitted by a far end and received by the information communication software; and
based on the coded data, driving the at least one interaction device to bring about a real motion corresponding to the information.

29. An information communication and interaction method, applying the information communication and interaction device of claim 1, the information communication and interaction method comprising:
providing at least one information communication and interaction device and connecting it to another information communication and interaction device via a third data transmission unit, so as to connect a plurality of information communication and interaction devices together;
by editing software in the data processing device, setting corresponding relation between ID numbers of the plurality of information communication and interaction devices and specific characters;
via the information communication and interaction devices, acquiring coded data corresponding to information transmitted by a far end specific character and received by the information communication software; and
based on the coded data, driving the plurality of information communication and interaction devices having ID numbers corresponding to the specific character to bring about a real motion corresponding to the data.

30. An information communication and interaction method, applying the information communication and interaction device of claim 1, the information communication and interaction method comprising:
providing an input device of at least one information communication and interaction device to input specific signal coded data;
based on the inputted specific signal coded data, driving at least one information communication and interaction device to bring about a real motion corresponding to the data;
having the at least one information communication and interaction device transmit corresponding coded data to the data processing device; and
having the data processing device transmit communication information corresponding to the received coded data to a data processing device of a far end user via the information communication software.

31. An information communication and interaction method, applying the information communication and interaction device of claim 1, the information communication and interaction method comprising:
by editing software provided in the data processing device, setting an input device of at least one information communication and interaction device to input specific signal coded data, and types of software being opened/closed in the data processing device and corresponding motions;
providing an input device of at least one information communication and interaction device to input specific signal coded data; and
based on the inputted coded data, opening/closing specific software in the data processing device.

32. The information communication and interaction method of claim 31, wherein the types of software being opened/closed in the data processing device include at least one of text processing software, webpage browser software, file browser software, and information communication software.

33. The information communication and interaction method of claim 31, wherein the corresponding motions include at least one of executing software, closing software, and input strings and digits.

34. An information communication and interaction method, applying the information communication and interaction device of claim 1, the information communication and interaction method comprising:
providing at least one information communication and interaction device and connecting it via a third data transmission unit to at least another information communication and interaction device so as to accordingly connect a plurality of information communication and interaction devices together;
setting relation between ID numbers of the plurality of information communication and interaction devices and corresponding specific characters in the information communication software;
via input devices of the plurality of information communication and interaction devices, inputting specific signal coded data;
based on the inputted coded data, driving the plurality of information communication and interaction devices to bring about a real motion corresponding to the data;
having the plurality of information communication and interaction devices transmit corresponding coded data and identity information of a specific character corresponding to the ID numbers to the data processing device; and
based on the identity information of the specific character corresponding to the ID numbers, via the information communication software, having the data processing device transmit communication information corresponding to the received coded data to a data processing device of a far end specific user.

35. An information communication and interaction method, applying the information communication and interaction device of claim 1, the information communication and interaction method comprising:
at the time via the information communication software of the data processing device a user is sending specific communication information to a data processing device of a far end user, transmitting corresponding coded data to at least one information communication and interaction device; and
based on the coded data, driving the at least one information communication and interaction device to bring about a real motion corresponding to the information.

36. An information communication and interaction method, applying the information communication and interaction device of claim 1, the information communication and interaction method comprising:
at the time via the information communication software of the data processing device a user is sending specific communication information to a data processing device of a far end user, transmitting corresponding coded data to at least one information communication and interaction device;
based on the coded data, driving the at least one information communication and interaction device to bring about a real motion corresponding to the information;
having the information communication and interaction device transmit its real interaction coded data to a far end server by means of wireless transmission; and
having an information communication and interaction device of a specific far end user receive the transmitted coded data from the far end server, and based on the received coded data, driving the information communication and interaction device to bring about a real motion corresponding to the information.

37. An information communication and interaction method, applying the information communication and interaction device of claim 1, the information communication and interaction method comprising:
setting time information by editing software provided in the data processing device;
when the set time is reached, having the data processing device transmit coded information to at least one information communication and interaction device;
having the at least one information communication and interaction device acquire the coded information, and based on the coded information, driving the information communication and interaction device to bring about a real motion corresponding to the information; and
having the data processing device transmit the received coded data to a data processing device of a far end specific user via the information communication software.

38. The information communication and interaction method of claim 37, wherein the set time information is limited time information or specific data and time information.

39. The information communication and interaction method of claim 37, wherein the corresponding interaction motion setting is stopping the corresponding relation of the communication information or a specific motion corresponding to specific date and time.
